(19) **Europäisches Patentamt**
**European Patent Office**
**Office européen des brevets**

(11) **EP 3 503 424 B1**

(12) **EUROPEAN PATENT SPECIFICATION**

(45) Date of publication and mention
of the grant of the patent:
**18.08.2021 Bulletin 2021/33**

(51) Int Cl.:
***H04B 7/04*** *(2017.01)*   ***H04B 7/06*** *(2006.01)*

(21) Application number: **17852257.9**

(86) International application number:
**PCT/CN2017/098288**

(22) Date of filing: **21.08.2017**

(87) International publication number:
**WO 2018/054188 (29.03.2018 Gazette 2018/13)**

(54) **DATA TRANSMITTING AND RECEIVING METHODS, DEVICES AND SYSTEMS, AND STORAGE MEDIUM**

DATENSENDE- UND -EMPFANGSVERFAHREN, -VORRICHTUNGEN UND -SYSTEME SOWIE SPEICHERMEDIUM

PROCÉDÉS, DISPOSITIFS ET SYSTÈMES D'ÉMISSION ET DE RÉCEPTION DE DONNÉES, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2016 CN 201610839205**

(43) Date of publication of application:
**26.06.2019 Bulletin 2019/26**

(73) Proprietor: **Huawei Technologies Co., Ltd.**
**Longgang District**
**Shenzhen, Guangdong 518129 (CN)**

(72) Inventors:
• **WU, Ye**
**Shenzhen**
**Guangdong 518129 (CN)**
• **GE, Shibin**
**Shenzhen**
**Guangdong 518129 (CN)**

• **BI, Xiaoyan**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**EP-A1- 2 802 087      CN-A- 101 115 045**
**CN-A- 101 584 141      CN-A- 101 771 648**
**US-A1- 2006 093 062**

• **DAMMANN A ET AL: "Beamforming in combination with space-time diversity for broadband OFDM systems", PROCEEDINGS OF IEEE INTERNATIONAL CONFERENCE ON COMMUNICATIONS - 28 APRIL-2 MAY 2002 - NEW YORK, NY, USA, IEEE, PISCATAWAY, NJ, USA, vol. 1, 28 April 2002 (2002-04-28), pages 165-171, XP010589479, DOI: 10.1109/ICC.2002.996838 ISBN: 978-0-7803-7400-3**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

This application relates to the field of communications technologies, and in particular, to a data sending method, a data receiving method, a device, a system, and a storage medium.

## BACKGROUND

A multiple input multiple output (English: Multiple Input Multiple Output, MIMO for short) technology is used in a Long Term Evolution (English: Long Term Evolution, LTE for short) system or a Long Term Evolution Advanced (English: Long Term Evolution-Advanced, LTE-A for short) system. In the MIMO technology, a plurality of antennas are deployed on a transmit end device and a receive end device, to improve performance of the LTE system or the LTE-A system. For example, the transmit end device may be user equipment (English: User equipment, UE for short), and the receive end device may be a base station. The base station may schedule a plurality of UEs to perform data transmission by using a corresponding transmission solution.

In the prior art, the base station may schedule UE to perform data transmission by using an open-loop transmit diversity (English: Open Loop Transmit Diversity, OLTD for short) transmission solution. In the OLTD transmission solution, cell-level signal coverage can be formed, to provide reliable signal quality for UE that uses the OLTD transmission solution.

In a process of implementing this application, the inventor finds that the prior art has at least the following problem: The OLTD transmission solution is a transmission solution of cell-level signal coverage, and data of the UE that uses the OLTD transmission solution easily causes interference to data of other UE. Consequently, a plurality of UEs cannot perform spatial multiplexing on a time-frequency resource, and a system throughput is affected.

European patent application EP 2,802,087 A1 describes techniques for transmitting data using a combination of transmit diversity schemes. A transmitting entity processes one or more (ND) data symbol streams based on a transmit diversity scheme (e.g., space-time transmit diversity, STTD, space-frequency transmit diversity, SFTD, or orthogonal transmit diversity, OTD) to generate multiple (NC) codes symbol streams. Each data symbol stream may be sent as a single coded symbol stream or as multiple (e.g., two) coded symbol streams using STTD, SFTD, or OTD. The transmitting entity may perform spatial spreading on the NC coded symbol streams with different matrices to generate multiple (NT) transmit symbol streams for transmission from NT antennas. Additionally or alternatively, the transmitting entity may perform continuous beamforming on the NT transmit symbol streams in either the time domain or the frequency domain.

A. Dammann, R. Raulefs and S. Kaiser, "Beamforming in Combination with Space-Time Diversity for Broadband OFDM Systems", Proceedings of IEEE International Conference on Communications (ICC 2002), New York, USA, vol. 1, pp. 165-171, 28 April 2002 investigates broadband ODFM system which apply beamforming in combination with different space-time diversity techniques. Various beamforming scenarios with transmitter and/or receiver sided beamforming are considered. Space-time diversity is obtained by cyclic delay diversity (CDD) in order to artificially shape the spectrum of the received signal. Thus, an advantageous distribution of the errors before a Viterbi channel decoder is obtained.

## SUMMARY

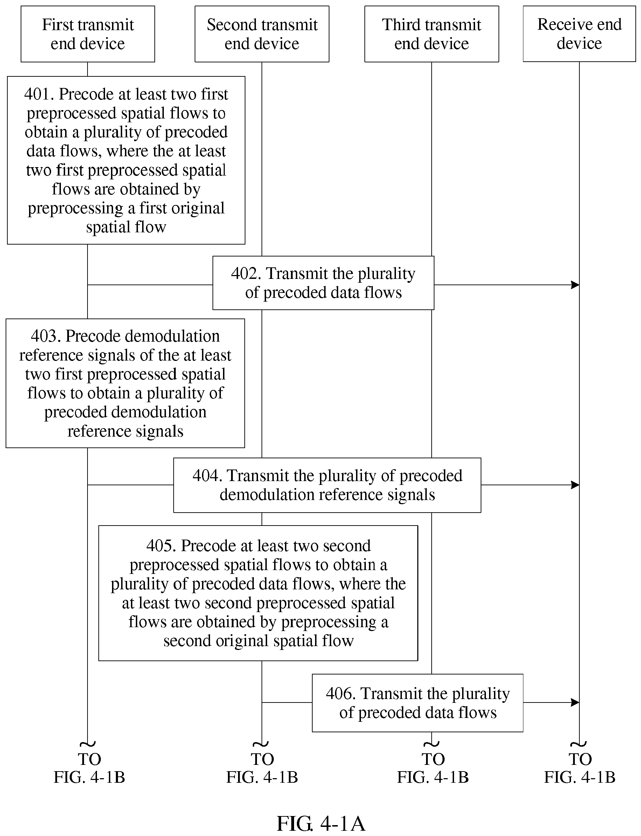

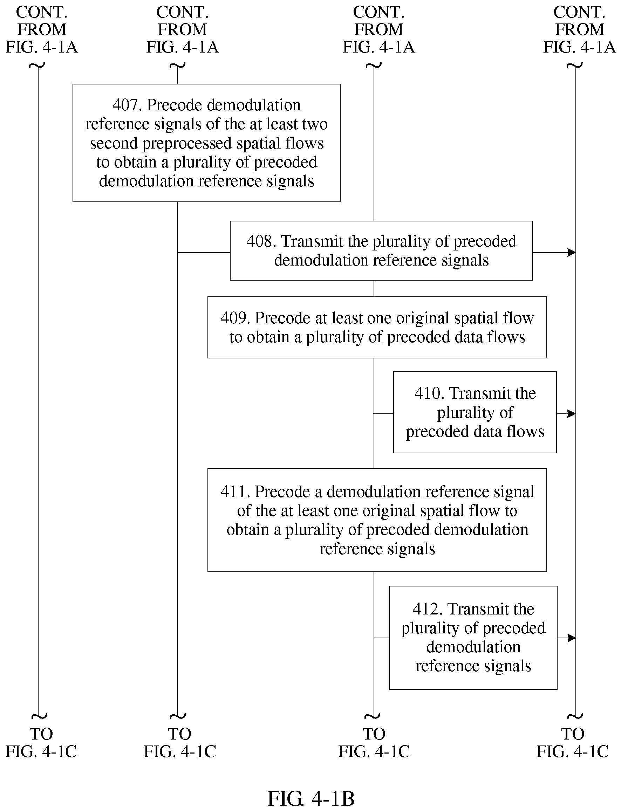

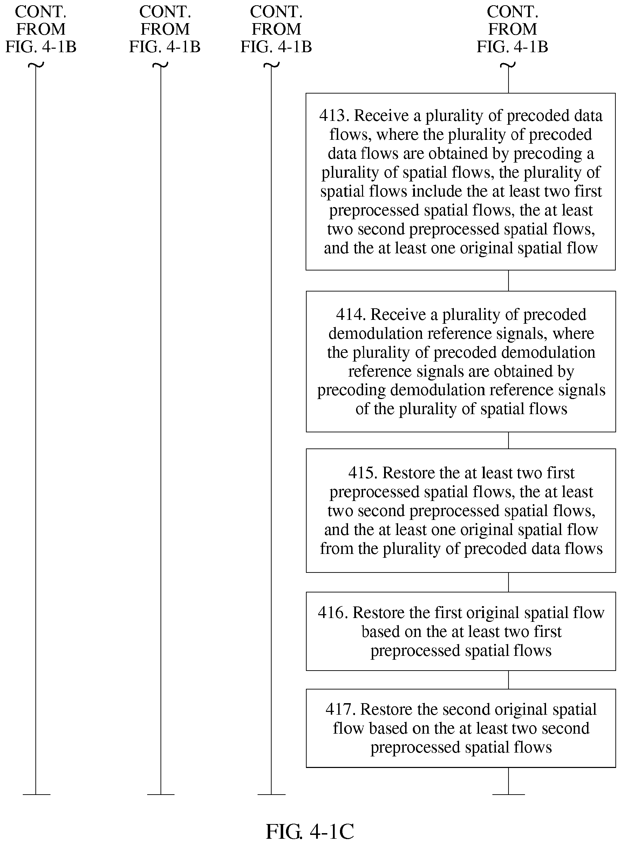

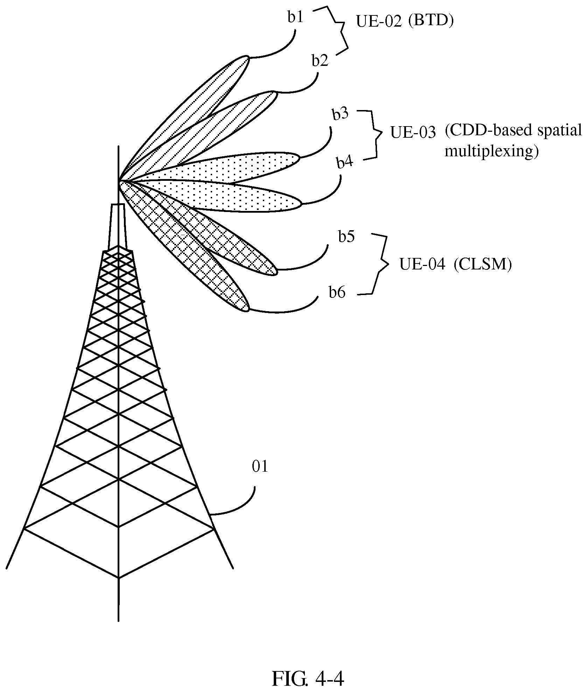

To resolve a problem that a plurality of UEs cannot perform spatial multiplexing on a time-frequency resource and a system throughput is affected, embodiments of this application provide a data sending method, a data receiving method, a device, a system, and a storage medium. The technical solutions of the invention are defined by the appended claims. Only the embodiments consistent with the subject-matter of the claims are part of the claimed invention, which is defined specifically in figures 4-1A to 4-1C, 4-4 and the corresponding paragraphs of the description. All embodiments not related to these figures are merely useful for better understanding the invention.

## BRIEF DESCRIPTION OF DRAWINGS

FIG. 1 is a schematic diagram of an implementation environment related to embodiments of this application;
FIG. 2 is a method flowchart of a data sending method according to an embodiment of this application;
FIG. 3 is a method flowchart of a data receiving method according to an embodiment of this application;
FIG. 4-1A, FIG. 4-1B, and FIG. 4-1C are a method flowchart of a data transmission method according to an embodiment of the invention;
FIG. 4-2 is a schematic diagram of a data transmission method according to the prior art;
FIG. 4-3 is a schematic diagram of another data transmission method according to the prior art;
FIG. 4-4 is a schematic diagram of a data transmission method according to an embodiment of the invention;
FIG. 5-1 is a block diagram of a transmit end device according to an embodiment of this application;
FIG. 5-2 is a block diagram of another transmit end device according to an embodiment of this application;

FIG. 6-1 is a block diagram of a receive end device according to an embodiment of this application;

FIG. 6-2 is a block diagram of another receive end device according to an embodiment of this application;

FIG. 7 is a schematic structural diagram of a transmit end device according to an embodiment of this application;

FIG. 8 is a schematic structural diagram of a receive end device according to an embodiment of this application; and

FIG. 9 is a schematic structural diagram of a data transmission system according to an embodiment of this application.

## DESCRIPTION OF EMBODIMENTS

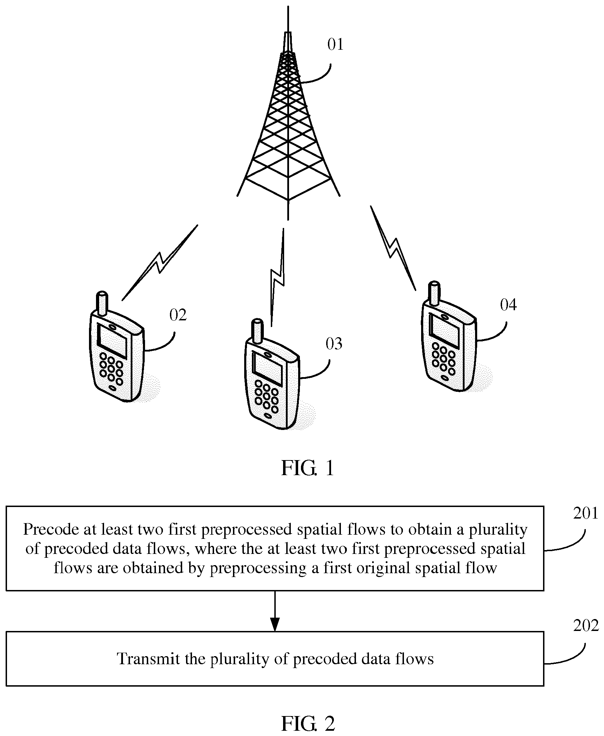

FIG. 1 is a schematic diagram of an implementation environment related to embodiments of this application. The implementation environment provides a data transmission system. The data transmission system may be a wireless communications system, and may be specifically a MIMO system. Referring to FIG. 1, the implementation environment may include a base station 01 and a plurality of UEs. For example, as shown in FIG. 1, the implementation environment is described by using an example in which the plurality of UEs include UE-02, UE-03, and UE-04.

In this implementation environment, the base station 01 and the plurality of UEs may be all transmit end devices or may be all receive end devices. For example, when the plurality of UEs are transmit end devices, the base station 01 is a receive end device; or when the base station 01 is a transmit end device, the plurality of UEs are receive end devices. This implementation environment and the following embodiments are all described by using an example in which the plurality of UEs are transmit end devices and the base station 01 is a receive end device.

In the embodiments of this application, the transmit end device (for example, the UE-02) may precode at least two first preprocessed spatial flows to obtain a plurality of precoded data flows, and transmit the plurality of precoded data flows. The at least two first preprocessed spatial flows are obtained by preprocessing a first original spatial flow. The receive end device (for example, the base station 01) may receive a plurality of precoded data flows. The plurality of precoded data flows may be obtained by precoding a plurality of spatial flows. The plurality of spatial flows may include at least two first preprocessed spatial flows from a first transmit end device (for example, the UE-02), at least two second preprocessed spatial flows from a second transmit end device (for example, the UE-03), and at least one original spatial flow from a third transmit end device (for example, the UE-04). The at least two first preprocessed spatial flows are obtained by preprocessing a first original spatial flow, and the at least two second preprocessed spatial flows are obtained by preprocessing a second original spatial flow. After receiving the plurality of precoded data flows, the receive end device may restore the at least two first preprocessed spatial flows, the at least two second preprocessed spatial flows, and the at least one original spatial flow from the plurality of precoded data flows, restore the first original spatial flow based on the at least two first preprocessed spatial flows, and restore the second original spatial flow based on the at least two second preprocessed spatial flows. The transmit end device preprocesses the first original spatial flow, to obtain the at least two first preprocessed spatial flows, so that a plurality of UEs can perform spatial multiplexing on a time-frequency resource, and a system throughput is improved.

FIG. 2 is a method flowchart of a data sending method according to an embodiment of this application. In this embodiment, that the data sending method is applied to a transmit end device is used as an example for description. The transmit end device may be any UE (for example, the UE-02) in the implementation environment shown in FIG. 1. Referring to FIG. 2, the method may include the following steps.

Step 201: Precode at least two first preprocessed spatial flows to obtain a plurality of precoded data flows, where the at least two first preprocessed spatial flows are obtained by preprocessing a first original spatial flow.

Step 202: Transmit the plurality of precoded data flows.

In conclusion, according to the data sending method provided in this embodiment of this application, the at least two first preprocessed spatial flows are precoded to obtain the plurality of precoded data flows, and the plurality of precoded data flows are transmitted. The at least two first preprocessed spatial flows are obtained by preprocessing the first original spatial flow. Therefore, a plurality of UEs can perform spatial multiplexing on a time-frequency resource. This helps to resolve a prior-art problem that a plurality of UEs cannot perform spatial multiplexing on a time-frequency resource and a system throughput is affected, and improves the system throughput.

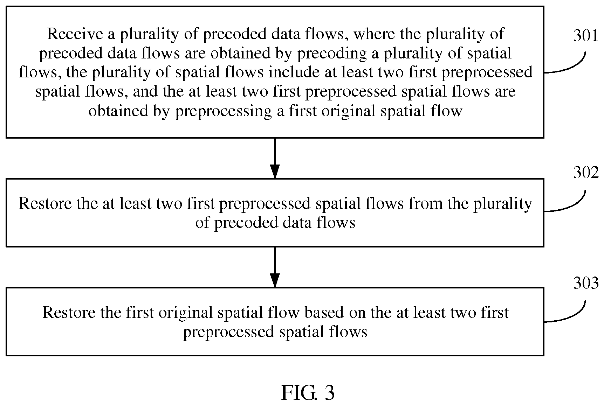

FIG. 3 is a method flowchart of a data receiving method according to an embodiment of this application. In this embodiment, that the data receiving method is applied to a receive end device is used as an example for description. The receive end device may be the base station 01 in the implementation environment shown in FIG. 1. Referring to FIG. 3, the method may include the following steps.

Step 301: Receive a plurality of precoded data flows, where the plurality of precoded data flows are obtained by precoding a plurality of spatial flows, the plurality of spatial flows include at least two first preprocessed spatial flows, and the at least two first preprocessed spatial flows are obtained by preprocessing a first original spatial flow.

Step 302: Restore the at least two first preprocessed spatial flows from the plurality of precoded data flows.

Step 303: Restore the first original spatial flow based on the at least two first preprocessed spatial flows.

In conclusion, according to the data receiving method provided in this embodiment of this application, the plurality of precoded data flows are received, the at least two first preprocessed spatial flows are restored from the plurality of precoded data flows, and the first original spatial flow is restored based on the at least two first preprocessed spatial flows. The at least two first preprocessed spatial flows are obtained by preprocessing the first original spatial flow. Therefore, a plurality of UEs can perform spatial multiplexing on a time-frequency resource. This helps to resolve a prior-art problem that a plurality of UEs cannot perform spatial multiplexing on a time-frequency resource and a system throughput is affected, and improves the system throughput.

FIG. 4-1A, FIG. 4-1B, and FIG. 4-1C are a method flowchart of a data transmission method according to an embodiment of this application. In this embodiment, that the data transmission method is applied to a system including a first transmit end device, a second transmit end device, a third transmit end device, and a receive end device is used as an example for description. The first transmit end device may be the UE-02 in the implementation environment shown in FIG. 1, the second transmit end device may be the UE-03 in the implementation environment shown in FIG. 1, the third transmit end device may be the UE-04 in the implementation environment shown in FIG. 1, and the receive end device may be the base station 01 in the implementation environment shown in FIG. 1. Referring to FIG. 4-1A, FIG. 4-1B, and FIG. 4-1C, the data transmission method may include the following steps.

Step 401: The first transmit end device precodes at least two first preprocessed spatial flows to obtain a plurality of precoded data flows, where the at least two first preprocessed spatial flows are obtained by preprocessing a first original spatial flow.

In this embodiment of this application, the first original spatial flow may be a spatial flow obtained after layer mapping. In this embodiment of this application, an original spatial flow (for example, the first original spatial flow) is described by using an LTE system as an example. In the LTE system, a physical channel processing process may usually include scrambling, modulation mapping, layer mapping, precoding, resource element mapping, and orthogonal frequency division multiplexing (English: Orthogonal Frequency Division Multiplexing, OFDM for short) signal generation. An object processed on a physical channel is usually a code word. The code word may be a bit stream obtained after coding processing (including at least channel coding processing). A scrambled bit stream may be obtained after the bit stream is scrambled. A modulated symbol flow may be obtained after modulation mapping is performed on the scrambled bit stream. A plurality of symbol layers (the symbol layer is also referred to as a spatial flow or a spatial layer) may be obtained after layer mapping is performed on the modulated symbol flow. A plurality of precoded symbol flows may be obtained after the symbol layers are precoded. The precoded symbol flows are mapped onto a plurality of resource elements through resource element (English: Resource Element, RE for short) mapping. Then, an OFDM symbol flow is obtained after the resource elements are processed in an OFDM signal generation stage. The OFDM symbol flow is transmitted by using an antenna port. The OFDM symbol flow may be obtained through inverse fast Fourier transformation (English: Inverse Fast Fourier Transform, IFFT for short) in the OFDM signal generation stage. In this embodiment of this application, the original spatial flow may be a spatial flow obtained after layer mapping. It should be noted that, to describe the technical solution provided in this embodiment of this application more clearly, in this embodiment of this application, a spatial flow obtained after layer mapping in an existing LTE standard is used to describe the original spatial flow in this embodiment of this application. However, a person skilled in the art should understand that in addition to the spatial flow obtained after layer mapping in the LTE standard, the original spatial flow in this embodiment of this application may be any modulated symbol flow obtained after processing such as modulation.

In this embodiment of this application, the first transmit end device (for example, the UE-02) may precode the at least two first preprocessed spatial flows, to obtain the plurality of precoded data flows. The at least two first preprocessed spatial flows are obtained by the first transmit end device by preprocessing the first original spatial flow. The preprocessing may include transmit diversity processing or transmit diversity-based spatial multiplexing processing.

During transmit diversity processing, redundant transmission is performed on the original spatial flow (for example, the first original spatial flow) in terms of a time, a frequency, space (for example, an antenna), or various combinations thereof, to improve transmission reliability. In a specific implementation process, a quantity of times of redundant transmission may be set based on a channel model or channel quality, and an object of redundant transmission may be the original spatial flow or may be a processed original spatial flow. Such processing may include but is not limited to delay, negation, conjugation, rotation, processing obtained after derivation, evolution, and combination are performed on the foregoing processing, and the like. Currently, commonly-used transmit diversity processing may include but is not limited to space time transmit diversity (English: Space-Time Transmit Diversity, STTD for short) processing, space-frequency transmit diversity (English: Space-Frequency Transmit Diversity, SFTD for short) processing, time switched transmit diversity (English: Time Switched Transmit Diversity, TSTD for short) processing, frequency switched transmit diversity (English: Frequency Switch Transmit Diversity, FSTD for short) processing, orthogonal transmit diversity (English: Orthogonal Transmit Diversity, OTD for short) processing, cyclic delay diversity (English: Cyclic delay diversity, CDD for short) processing, and transmit diversity processing obtained after derivation, evolution, and combination are performed on the foregoing various types of transmit diversity processing. For example, transmit diversity processing such as space time block code (English: Space Time Block Coding, STBC for short), space frequency block coding (English: Space Frequency Block Coding, SFBC for short), and CDD is used in the LTE standard. In this embodiment of this application, the transmit diversity processing may include any one of space time transmit diversity processing, space-frequency transmit diversity processing, space-time-frequency transmit diversity processing, cyclic delay transmit diversity processing, open-loop transmit diversity processing, and various forms of the foregoing diversity processing. The transmit diversity-based spatial multiplexing processing may be large-scale delay CDD precoding processing. In this embodiment of this application, when the transmit diversity processing is the space time transmit diversity processing, the space-frequency transmit diversity processing, or the space-time-frequency transmit diversity processing, a transmission solution in which the original spatial flow is both preprocessed and precoded may be referred to as a beamforming transmit diversity (English: Beamformed Transmit Diversity, BTD for short) transmission solution. When the transmit diversity processing is the cyclic delay transmit diversity processing, a transmission solution in which the original spatial flow is both preprocessed and precoded may be referred to as an open-loop spatial multiplexing (English: Open-Loop Spatial Multiplexing, OLSM for short) transmission solution. When the transmit diversity processing is the open-loop transmit diversity processing, a transmission solution in which the original spatial flow is both preprocessed and precoded (a precoding matrix is an identity matrix) may be referred to as an open-loop transmit diversity (English: Open Loop Transmit Diversity, OLTD for short) transmission solution. When the preprocessing is the transmit diversity-based spatial multiplexing processing, a transmission solution in which the original spatial flow is both preprocessed and precoded may be referred to as a large-scale delay CDD transmission solution. A transmission solution in which the original spatial flow is only precoded may be referred to as a closed-loop spatial multiplexing (English: Closed-Loop Spatial Multiplexing, CLSM for short) transmission solution. It should be noted that the transmit diversity processing in this embodiment of this application is generally described above by using an example. A person skilled in the art should understand that, in addition to the foregoing example, the transmit diversity processing further includes many other implementations. Therefore, the foregoing description should not be construed as a limitation on the technical solutions of this application, and the technical solutions of this application should be considered as solutions that are applicable to various types of possible transmit diversity processing. In addition, the preprocessing in this application is merely an example. In an actual application, the preprocessing includes but is not limited to the transmit diversity processing and the transmit diversity-based spatial multiplexing processing. Therefore, a person skilled in the art should understand that in addition to the foregoing example, the transmit diversity processing and the transmit diversity-based spatial multiplexing processing in this application cannot be used to limit the preprocessing in this application.

The first transmit end device may precode the at least two first preprocessed spatial flows by using a precoding technology. In the precoding technology, a precoding matrix that matches a channel attribute is used to process a spatial flow, so that a precoded spatial flow is adapted to a channel. The precoding matrix may include a plurality of precoding vectors, and the precoding vectors are usually column vectors of the precoding matrix. A quantity of precoding vectors is the same as a quantity of spatial flows of the receive end device that are corresponding to the precoding matrix. Each of the at least two first preprocessed spatial flows may be corresponding to one precoding vector, and different first preprocessed spatial flows in the at least two first preprocessed spatial flows are corresponding to different precoding vectors. The first transmit end device may precode the at least two first preprocessed spatial flows by using at least two precoding vectors. The first preprocessed spatial flows are precoded, so that a data transmission process can be optimized, and received signal quality can be improved. The received signal quality includes, for example, a signal to interference plus noise ratio (English: Signal to Interference plus Noise Ratio, SINR for short), a signal-to-noise ratio (English: signal-to-noise ratio, SNR for short), and a signal received power.

Optionally, in this embodiment of this application, the first transmit end device may precode the at least two first preprocessed spatial flows by using an identity matrix, and column vectors of the identity matrix are precoding vectors of the at least two first preprocessed spatial flows. In other words, the column vectors of the identity matrix are in a one-to-one correspondence with the precoding vectors of the at least two first preprocessed spatial flows, and a dimension quantity of the identity matrix is equal to a quantity of at least two first preprocessed spatial flows. The identity matrix is a matrix in which all elements on a main diagonal are 1 and all the other elements are 0. That the at least two first preprocessed spatial flows are precoded by using the identity matrix is actually equivalent to that no precoding is performed on the at least two first preprocessed spatial flows. Precoding the at least two first preprocessed spatial flows by using the identity matrix is usually applicable to a transmit end device with a relatively small quantity of transmit antenna elements. For example, the at least two first preprocessed spatial flows include three preprocessed spatial flows: a first preprocessed spatial flow 11, a first preprocessed spatial flow 12, and a first preprocessed spatial flow 13. The identity matrix may be

$$A = \begin{bmatrix} 1 & 0 & 0 \\ 0 & 1 & 0 \\ 0 & 0 & 1 \end{bmatrix},$$

and the identity matrix A includes

$$A1 = \begin{bmatrix} 1 \\ 0 \\ 0 \end{bmatrix}, \qquad A2 = \begin{bmatrix} 0 \\ 1 \\ 0 \end{bmatrix},$$

column vectors and

$$A3 = \begin{bmatrix} 0 \\ 0 \\ 1 \end{bmatrix}.$$

The column vector A1 may be a precoding vector of the first preprocessed spatial flow 11, the column vector A2 may be a precoding vector of the first preprocessed spatial flow 12, and the column vector A3 may be a precoding vector of the first preprocessed spatial flow 13. The first transmit end device may precode the first preprocessed spatial flow 11 by using the column vector A1, precode the first preprocessed spatial flow 12 by using the column vector A2, and precode the first preprocessed spatial flow 13 by using the column vector A3. For a specific precoding implementation process, refer to a related part in the prior art. Details are not described herein in this embodiment of this application. It should be noted that in this embodiment of this application, a transmission solution in which the open-loop transmit diversity processing is performed on the original spatial flow and a processed spatial flow is precoded by using the identity matrix may be referred to as an OLTD transmission solution.

It should be noted that in this embodiment of this application, that the first transmit end device precodes the at least two first preprocessed spatial flows by using the identity matrix is used as an example for description. In an actual application, the first transmit end device may alternatively precode the at least two first preprocessed spatial flows by using a precoding matrix in which none of elements on a main diagonal are 0 and all the other elements are 0. In this case, some elements on the main diagonal of the precoding matrix may be greater than 1, and some elements may be less than 1 and greater than 0. Therefore, some of the at least two first preprocessed spatial flows may be increased or decreased in a process in which the at least two first preprocessed spatial flows are precoded by using the precoding matrix. For example, the at least two first preprocessed spatial flows still include the three preprocessed spatial flows: the first preprocessed spatial flow 11, the first preprocessed spatial flow 12, and the first preprocessed spatial flow 13. The precoding matrix may be

$$B = \begin{bmatrix} 1.2 & 0 & 0 \\ 0 & 1 & 0 \\ 0 & 0 & 0.8 \end{bmatrix},$$

and the precoding matrix B includes column vectors

$$B1 = \begin{bmatrix} 1.2 \\ 0 \\ 0 \end{bmatrix}, \quad B2 = \begin{bmatrix} 0 \\ 1 \\ 0 \end{bmatrix},$$

and

$$B3 = \begin{bmatrix} 0 \\ 0 \\ 0.8 \end{bmatrix}.$$

The column vector B1 may be a precoding vector of the first preprocessed spatial flow 11, the column vector B2 may be a precoding vector of the first preprocessed spatial flow 12, and the column vector B3 may be a precoding vector of the first preprocessed spatial flow 13. The first transmit end device may precode the first preprocessed spatial flow 11 by using the column vector B1, to increase the first preprocessed spatial flow 11; precode the first preprocessed spatial flow 12 by using the column vector B2, to keep the first preprocessed spatial flow 12 unchanged; and precode the first preprocessed spatial flow 13 by using the column vector B3, to decrease the first preprocessed spatial flow 13. For a specific precoding implementation process, refer to the prior art. Details are not described herein in this embodiment of this application.

In this embodiment of this application, the first preprocessed spatial flow 11, the first preprocessed spatial flow 12, and the first preprocessed spatial flow 13 may be obtained by the first transmit end device by performing space time transmit diversity processing, space-frequency transmit diversity processing, or space-time-frequency transmit diversity processing on a first original spatial flow 1, or may be obtained by the first transmit end device by performing cyclic delay transmit diversity processing on a first original spatial flow 1, or may be obtained by the first transmit end device by performing open-loop transmit diversity processing on a first original spatial flow 1, or may be obtained by the first transmit end device by performing transmit diversity-based spatial multiplexing processing on a first original spatial flow 1. When the first preprocessed spatial flow 11, the first preprocessed spatial flow 12, and the first preprocessed spatial flow 13 are obtained by the first transmit end device by performing space time transmit diversity processing, space-frequency transmit diversity processing, or space-time-frequency transmit diversity processing on the first original spatial flow 1, the first transmit end device may be a device that performs data transmission by using the BTD transmission solution. When the first preprocessed spatial flow 11, the first preprocessed spatial flow 12, and the first preprocessed spatial flow 13 are obtained by the first transmit end device by performing cyclic delay transmit diversity processing on the first original spatial flow 1, the first transmit end device may be a device that performs data transmission by using the OLSM transmission solution. When the first preprocessed spatial flow 11, the first preprocessed spatial flow 12, and the first preprocessed spatial flow 13 are obtained by the first transmit end device by performing open-loop transmit diversity processing on the first original spatial flow 1, the first transmit end device may be a device that performs data transmission by using the OLTD transmission solution. When the first preprocessed spatial flow 11, the first preprocessed spatial flow 12, and the first preprocessed spatial flow 13 are obtained by the first transmit end device by performing transmit diversity-based spatial multiplexing processing on the first original spatial flow 1, the first transmit end device may be a device that performs data transmission by using the large-scale delay CDD transmission solution. In this embodiment of this application, that the first preprocessed spatial flow 11, the first preprocessed spatial flow 12, and the first preprocessed spatial flow 13 are obtained by the first transmit end device by performing space time transmit diversity processing on the first original spatial flow 1 is used as an example for description. Therefore, the first transmit end device is the device that performs data transmission by using the BTD transmission solution. In this embodiment of this application, when the transmit end device is UE, a base station may indicate a transmission solution to the UE by using downlink signaling, so that the UE can perform data transmission by using the corresponding transmission solution. For example, the base station 01 instructs, by using downlink signaling, the UE-02 to perform data transmission by using the BTD transmission solution. The base station may indicate the transmission solution by using a format of the downlink signaling, or may indicate the transmission solution by using content of the downlink signaling. This is not limited in this embodiment of this application. It should be noted that the transmission solution is generally described above by using an example. A person skilled in the art should understand that, in addition to the foregoing example, there are also many other transmission solutions. Therefore, the foregoing description should not be construed as a limitation on the technical solutions of this application.

In this embodiment of this application, it is assumed that the first transmit end device precodes the first preprocessed spatial flow 11 to obtain a precoded data flow 110, precodes the first preprocessed spatial flow 12 to obtain a precoded data flow 120, and precodes the first preprocessed spatial flow 13 to obtain a precoded data flow 130. However, it should be noted that in this embodiment of this application, for ease of description, a precoded data flow obtained by precoding one spatial flow is marked as one precoded data flow, for example, the precoded data flow 110, the precoded data flow 120, and the precoded data flow 130. However, in an actual application, a plurality of precoded data flows may be usually obtained by precoding one spatial flow. A specific quantity of precoded data flows is related to a quantity of physical antennas or a quantity of antenna ports. It can be learned that the precoded data flow 110, the precoded data flow 120, and the precoded data flow 130 each indicate a group of precoded data flows, and a quantity of precoded data flows in the group of precoded data flows is related to a quantity of physical antennas or a quantity of antenna ports. Each precoded data flow in the group of precoded data flows is transmitted by using one corresponding physical antenna or antenna port, and the precoded data flow transmitted by using the physical antenna or the antenna port may be considered as a transmit component of a corresponding preprocessed spatial flow on the physical antenna or the antenna port. This part of content is clearly described in the prior art, and is not described herein in this embodiment of this application.

It should be noted that the data transmission method provided in this embodiment of this application is applicable to a MIMO system. In the MIMO system, spatial multiplexing is usually implemented by using the precoding technology, so that a plurality of spatial flows are simultaneously transmitted between a transmit end device and a receive end device, to improve a system throughput. The MIMO system usually includes a single user MIMO (English: Single-user MIMO, SU-MIMO for short) scenario and a multi-user MIMO (English: Multi-user MIMO, MU-MIMO for short) scenario. In the SU-MIMO scenario, a plurality of spatial flows on which spatial multiplexing is performed come from a same transmit end device. In the MU-MIMO scenario, a plurality of spatial flows on which spatial multiplexing is performed come from at least two transmit end devices. Currently, the precoding technology is used in a plurality of wireless communications standards, for example, but not limited to, the LTE standard. In the LTE standard, precoding is processing performed on a transmit signal based on a specific matrix. Therefore, precoding in the LTE standard not only includes precoding used for spatial multiplexing, but also includes precoding used for transmit diversity, and the like. However, unless otherwise specified, precoding in the technical solution provided in this embodiment of this application is only precoding performed on a spatial flow based on a spatial multiplexing purpose by using a precoding matrix, and does not include precoding used for transmit diversity. In addition, precoding in the technical solution provided in this embodiment of this application may be precoding that is not based on channel state information. Such precoding is also referred to as open-loop precoding, and is similar to, for example, but not limited to, precoding that is not combined with CDD and precoding used for large-scale delay CDD in the LTE standard. In addition, precoding in the technical solution provided in this embodiment of this application may alternatively be precoding that is based on channel state information. Such precoding is also referred to as closed-loop precoding, and is similar to, for example, but is not limited to, closed-loop spatial multiplexing in the LTE standard. A specific precoding form and type are not limited in this embodiment of this application.

It should be understood that although a plurality of antennas are deployed on a transmit end device and a receive end device in increasingly more communications systems, a person skilled in the art should understand that, in addition to the MIMO system, such communications systems may also be used to implement a single-input single-output (English: Single Input Single Output, SISO for short) system, a single-input multiple-output (English: Single Input Multiple output, SIMO for short) system, and a multiple-input-single-output (English: Multiple Input Single Output, MISO for short) system. Therefore, it should be understood that MIMO described in this specification includes various application forms of a multiple-antenna technology, and includes but is not limited to the SISO system, the SIMO system, the MISO system, and the MIMO system described above.

It should be further noted that in this embodiment of this application, the original spatial flow may be precoded by using Y=F1(S), to obtain a precoded data flow, where Y represents the precoded data flow, F1 represents precoding, and S represents the original spatial flow. If preprocessing performed on the original spatial flow is also considered as precoding, two-level precoding is performed on the original spatial flow in this embodiment of this application. In this case, the original spatial flow may be precoded by using Y=F1(F2(S)), to obtain the precoded data flow, where Y represents the precoded data flow, F2 represents preprocessing, F1 represents precoding, and S represents the original spatial flow. Details are not described herein in this embodiment of this application.

Step 402: The first transmit end device transmits the plurality of precoded data flows to the receive end device.

After obtaining the plurality of precoded data flows, the first transmit end device may transmit the plurality of precoded data flows to the receive end device. The first transmit end device may be the UE-02 in the implementation environment shown in FIG. 1, and the receive end device may be the base station 01 in the implementation environment shown in FIG. 1. For example, the first transmit end device transmits the precoded data flow 110, the precoded data flow 120, and the precoded data flow 130 to the receive end device. The first transmit end device may transmit the plurality of precoded data flows to the receive end device by using antenna ports. A specific transmission process is clearly described in the prior art, and is not described herein in this embodiment of this application.

Step 403: The first transmit end device precodes demodulation reference signals of the at least two first preprocessed spatial flows to obtain a plurality of precoded demodulation reference signals.

In this embodiment of this application, each of the at least two first preprocessed spatial flows is corresponding to one demodulation reference signal, and the first transmit end device may precode the demodulation reference signals of the at least two first preprocessed spatial flows, to obtain the plurality of precoded demodulation reference signals. Preferably, the first transmit end device may precode the demodulation reference signals of the at least two first preprocessed spatial flows by using precoding vectors the same as those used to precode the at least two first preprocessed spatial flows, so that the receive end device may demodulate the at least two first preprocessed spatial flows by using the demodulation reference signals of the at least two first preprocessed spatial flows.

Each precoding vector of at least two pieces of precoding corresponding to the at least two first preprocessed spatial flows may be corresponding to one demodulation reference signal (English: Demodulation Reference Signal, DMRS for short) port, and different precoding vectors of the at least two pieces of precoding are corresponding to different DMRS ports. Alternatively, at least two precoding vectors are corresponding to a same DMRS port, and precoding vectors (or spatial flows) corresponding to a same DMRS port have different DMRS sequences. The different DMRS sequences may be DMRS sequences obtained after different displacements are applied to a same root sequence or DMRS sequences obtained based on different root sequences. In other words, different DMRS port numbers may be used to distinguish between different DMRSs. Alternatively, when DMRS port numbers are the same (a same DMRS port number is allocated to different spatial flows (different precoding vectors)), different DMRS sequences may be used for different DMRSs. Herein, the different DMRS sequences may be DMRS sequences obtained after different displacements are applied to a same root sequence (for example, a ZC sequence) or DMRS sequences obtained based on different root sequences. Both a DMRS port number and a DMRS sequence are designated by the base station for the UE, for example, by using downlink signaling (for example but not limited to DCI). A DMRS may be used to demodulate a channel (a precoded channel) because a precoding vector used to precode each first preprocessed spatial flow is the same as a precoding vector used to precode a DMRS corresponding to the first preprocessed spatial flow and the DMRS does not need to be preprocessed. In other words, after the at least two first preprocessed spatial flows are obtained by preprocessing the first original spatial flow, the first preprocessed spatial flows are associated with respective DMRSs, and the DMRSs may be different. The receive end device may demodulate a received precoded data flow based on a DMRS corresponding to a DMRS port, to obtain a first preprocessed spatial flow. For related content of the DMRS, for example, but not limited to, a relationship between a spatial flow and each of a DMRS port, a DMRS sequence, and a DMRS, refer to the prior art. Related content is clearly described in the prior art, and therefore is not described herein. It should be noted that in this embodiment of this application, one UE may use different DMRS ports, or may use a same DMRS port. When one UE uses a same DMRS port, different DMRS sequences may be used to distinguish between corresponding demodulation reference signals. Different UEs may use different DMRS ports, or may use a same DMRS port. When different UEs use a same DMRS port, different DMRS sequences may be used to distinguish between corresponding demodulation reference signals. This is not limited in this embodiment of this application.

It should be noted that in this embodiment of this application, the at least two first preprocessed spatial flows are obtained by the first transmit end device by preprocessing the first original spatial flow. Therefore, after obtaining the at least two first preprocessed spatial flows through demodulation, the receive end device further needs to restore the first original spatial flow based on the at least two first preprocessed spatial flows and a preprocessing manner of the first transmit end device.

For example, assuming that the first preprocessed spatial flow 11 is corresponding to a demodulation reference signal S11, the first preprocessed spatial flow 12 is corresponding to a demodulation reference signal S12, and the first preprocessed spatial flow 13 is corresponding to a demodulation reference signal S13, the first transmit end device precodes the demodulation reference signal S11 to obtain a precoded demodulation reference signal S110, precodes the demodulation reference signal S12 to obtain a precoded demodulation reference signal S120, and precodes the demodulation reference signal S13 to obtain a precoded demodulation reference signal S130. Similar to the precoded data flow described above, the precoded demodulation reference signal S110, the precoded demodulation reference signal S120, and the precoded demodulation reference signal S130 each indicate a group of precoded demodulation reference signals, and a quantity of precoded demodulation reference signals in the group of precoded demodulation reference signals is related to a quantity of physical antennas or a quantity of antenna ports. Each precoded demodulation reference signal in the group of precoded demodulation reference signals is transmitted by using one corresponding physical antenna or antenna port, and the precoded demodulation reference signal transmitted by using the physical antenna or the antenna port may be considered as a transmit component of a corresponding demodulation reference signal on the physical antenna or the antenna port. This part of content is clearly described in the prior art, and is not described herein in this embodiment of this application.

It should be noted that the first transmit end device may precode, by using $Z=F1(X)$, the demodulation reference signals corresponding to the at least two first preprocessed spatial flows, to obtain the precoded demodulation reference signals, where Z represents the precoded demodulation reference signal, F1 represents precoding, and X represents the demodulation reference signal. A specific precoding process is clearly described in the prior art, and is not described herein in this embodiment of this application.

It should be further noted that, in an actual application, step 401 and step 403 in this embodiment of this application may be performed simultaneously. This is not limited in this embodiment of this application.

Step 404: The first transmit end device transmits the plurality of precoded demodulation reference signals to the receive end device.

After obtaining the plurality of precoded demodulation reference signals, the first transmit end device may transmit the plurality of precoded demodulation reference signals to the receive end device. The first transmit end device may be the UE-02 in the implementation environment shown in FIG. 1, and the receive end device may be the base station 01 in the implementation environment shown in FIG. 1. For example, the first transmit end device transmits the precoded demodulation reference signal S120, the precoded demodulation reference signal S110, and the precoded demodulation reference signal S130 to the receive end device.

It should be noted that in this embodiment of this application, the first transmit end device may be UE, and the receive end device is a base station. Because the at least two first preprocessed spatial flows are obtained by the first transmit end device by preprocessing the first original spatial flow, and the transmitted precoded data flows need to be demodulated by using DMRSs, the first transmit end device needs to learn of the preprocessing manner and DMRS resources to complete data transmission. Before the first transmit end device transmits data, the receive end device (the base station) may designate a preprocessing manner for the first transmit end device and allocate a DMRS resource to the first transmit end device by using downlink signaling. The DMRS resource includes but is not limited to a DMRS port (used to identify a DMRS), a designated sequence (for example, a Z-C sequence), and the like. The designated sequence from the receive end device has a one-to-one correspondence with the transmit end device and the DMRS. The receive end device may send the designated sequence to the first transmit end device. After receiving the DMRS, the receive end device determines, based on the one-to-one correspondence between the designated sequence and each of the transmit end device and the DMRS, the DMRS transmitted by the first transmit end device. The preprocessing may be the transmit diversity processing or the transmit diversity-based spatial multiplexing processing. The transmit diversity processing includes but is not limited to the space time transmit diversity processing, the space-frequency transmit diversity processing, the space-time-frequency transmit diversity processing, the cyclic delay diversity processing, or the open-loop transmit diversity processing. The transmit diversity-based spatial multiplexing processing may be the large-scale delay CDD precoding processing. That the first transmit end device is the UE-02 and the receive end device is the base station 01 is used as an example for description below.

Specifically, the receive end device may send, to the first transmit end device together by using the downlink signaling, information (such as port numbers and designated sequences) about the DMRS resources allocated to the first transmit end device and information about the preprocessing manner designated for the first transmit end device. The first transmit end device may preprocess the first original spatial flow based on the preprocessing manner indicated by the received information about the preprocessing manner, to obtain the at least two first preprocessed spatial flows; then precode the at least two first preprocessed spatial flows, to obtain the plurality of precoded data flows; and transmit the plurality of precoded data flows to the receive end device by using the DMRS resources allocated by the receive end device to the first transmit end device. The receive end device (the base station 01) may send the information about the DMRS resources and the information about the preprocessing manner to the first transmit end device (the UE-02) in the following several manners. In this embodiment of this application, the information about the DMRS resources may include at least one of DMRS ports and the designated sequences, the DMRS ports may be identified by using the port numbers, there may be a plurality of resources on each DMRS port, each resource may be identified by using a designated sequence, and a same designated sequence may indicate resources on different DMRS ports.

Manner 1: The receive end device sends, to the first transmit end device by using downlink signaling, information about a DMRS resource of a DMRS corresponding to each first preprocessed spatial flow and the information about the preprocessing manner corresponding to the first original spatial flow. The information about the preprocessing manner corresponding to the first original spatial flow is information about a preprocessing manner that is designated by the receive end device for the first transmit end device and that is used to preprocess the first original spatial flow.

For example, the base station 01 instructs, by using downlink signaling, the UE-02 to send data by using resources, identified by a designated sequence A, on a DMRS port whose port number is x+1 and a DMRS port whose port number is x, and instructs the UE-02 to preprocess the first original spatial flow by using the space time transmit diversity processing. For another example, the base station 01 instructs, by using downlink signaling, the UE-02 to send data by using resources, identified by a designated sequence B, on a DMRS port whose port number is x+2 and a DMRS port whose port number is x, and instructs the UE-02 to preprocess the first original spatial flow by using the transmit diversity-based spatial multiplexing processing. For another example, the base station 01 instructs, by using downlink signaling, the UE-02 to send data by using resources, identified by a designated sequence C, on a DMRS port whose port number is y and a DMRS port whose port number is x, and instructs the UE-02 to preprocess the first original spatial flow by using the cyclic delay transmit diversity processing. Optionally, when the base station 01 indicates the preprocessing manner to the UE-02 by using the downlink signaling, several bits may be allocated in a fixed manner to designate the preprocessing manner. For example, 2 bits are used to indicate the preprocessing manner, and the 2 bits may indicate four preprocessing manners in total. For example, 00 indicates the space time transmit diversity processing, 01 indicates the space-frequency transmit diversity processing, 10 indicates the space-time-frequency transmit diversity processing, and 11 indicates the cyclic delay transmit diversity processing. Certainly, the base station 01 may also indicate the preprocessing manner in another manner. This is not limited in this embodiment of this application.

Manner 2: The receive end device sends, to the first transmit end device by using downlink signaling, information about the DMRS resources of the DMRSs corresponding to the at least two first preprocessed spatial flows, and the information about the DMRS resources of the DMRSs corresponding to the at least two first preprocessed spatial flows is uniquely corresponding to one preprocessing manner.

In Manner 2, the information (for example, identifiers of the DMRS resources or a quantity of DMRS resources, where the identifier of the DMRS resource may include a port number and a designated sequence) about the DMRS resources of the DMRSs corresponding to the at least two first preprocessed spatial flows may indicate the preprocessing manner. There is a mapping relationship between information about DMRS resources and a preprocessing manner, and the information about the DMRS resources of the DMRSs corresponding to the at least two first preprocessed spatial flows is uniquely corresponding to one preprocessing manner. The first transmit end device may determine the preprocessing manner based on the information about the DMRS resources and the mapping relationship. For example, the mapping relationship is as follows: The space time transmit diversity processing needs to be used when data is sent by using resources, identified by a designated sequence A, on a DMRS port whose port number is x+1 and a DMRS port whose port number is x, or the space time transmit diversity processing needs to be used when two DMRS ports are used. Therefore, when the UE-02 learns that the information about the DMRS resources of the DMRSs corresponding to the at least two first preprocessed spatial flows is the resources, identified by the designated sequence A, on the DMRS port whose port number is x+1 and the DMRS port whose port number is x, the UE-02 may determine, based on the mapping relationship, that preprocessing designated by the base station 01 for the UE-02 is the space time transmit diversity processing.

Manner 3: The receive end device sends, to the first transmit end device by using downlink signaling, the information about the preprocessing manner corresponding to the first original spatial flow, and the preprocessing manner corresponding to the first original spatial flow is uniquely corresponding to information about one group of DMRS resources.

The information about the preprocessing manner may be an identifier of the preprocessing manner, and the receive end device may indicate the preprocessing manner to the first transmit end device by using one or more bits. In Manner 3, the preprocessing manner corresponding to the first original spatial flow may indicate the information about the DMRS resources. There is a mapping relationship between a preprocessing manner and information about DMRS resources. The preprocessing manner used for the first original spatial flow may be uniquely corresponding to the information about the group of DMRS resources, and the UE-02 may determine the information about the DMRS resources based on the preprocessing manner and the mapping relationship, and further determine the DMRS resources based on the information about the DMRS resources. For example, the base station 01 instructs, by using downlink signaling, the UE-02 to preprocess the first original spatial flow by using the space time transmit diversity processing. The mapping relationship is as follows: When preprocessing is performed by using the space time transmit diversity processing, data needs to be sent by using resources, identified by a designated sequence A, on a DMRS port whose port number is x+1 and a DMRS port whose port number is x. Therefore, the UE-02 may learn, based on the preprocessing manner indicated by the base station 01 and the mapping relationship, that the information about the DMRS resources is the resources, identified by the designated sequence A, on the DMRS port whose port number is x+1 and the DMRS port whose port number is x.

Manner 4: The receive end device sends, to the first transmit end device by using downlink signaling, a quantity of DMRS resources (for example, a quantity of DMRS ports) of the DMRSs corresponding to the at least two first preprocessed spatial flows, and the quantity of DMRS resources corresponding to the at least two first preprocessed spatial flows is uniquely corresponding to one preprocessing manner and one group of DMRS resources.

In Manner 4, the receive end device indicates, by using the quantity of DMRS resources of the DMRSs corresponding to the at least two first preprocessed spatial flows, the preprocessing manner used by the first transmit end device to preprocess the first original spatial flow and the DMRS resources corresponding to the at least two first preprocessed spatial flows. There is a mapping relationship between a preprocessing manner, a quantity of DMRS resources, and the DMRS resources, and the quantity of DMRS resources of the DMRSs corresponding to the at least two first preprocessed spatial flows is uniquely corresponding to one preprocessing manner and one group of DMRS resources. The first transmit end device may determine, based on the quantity of DMRS resources and the mapping relationship, the preprocessing manner designated by the receive end device for the first transmit end device and the DMRS resources. For example, the base station 01 indicates, to the UE-02 by using downlink signaling, that the quantity of DMRS resources of the DMRSs corresponding to the at least two first preprocessed spatial flows is 2. The mapping relationship is as follows: When two DMRS resources are used, preprocessing needs to be performed by using the space time transmit diversity processing, and for the DMRSs corresponding to the spatial flows, data needs to be sent by using resources, identified by a designated sequence A, on a DMRS port whose port number is x+1 and a DMRS port whose port number is x. The UE-02 may determine, based on the mapping relationship and the quantity that is of the DMRS resources of the DMRSs corresponding to the at least two first preprocessed spatial flows and that is indicated by the base station 01, that the preprocessing manner used to preprocess the first original spatial flow is the space time transmit diversity processing, and the DMRS resources corresponding to the at least two first preprocessed spatial flows are the resources, identified by the designated sequence A, on the DMRS port whose port number is x+1 and the DMRS port whose port number is x.

Manner 5: The receive end device sends, to the first transmit end device by using downlink signaling, a quantity of DMRS resources of the DMRSs corresponding to the at least two first preprocessed spatial flows and the information about the preprocessing manner corresponding to the first original spatial flow, and the quantity of DMRS resources of the DMRSs corresponding to the at least two first preprocessed spatial flows and the preprocessing manner corresponding to the first original spatial flow are uniquely corresponding to one group of DMRS resources.

In Manner 5, the receive end device indicates, by using the quantity of DMRS resources of the DMRSs corresponding to the at least two first preprocessed spatial flows and the preprocessing manner corresponding to the first original spatial flow, the DMRS resources of the DMRSs corresponding to the at least two first preprocessed spatial flows. There is a mapping relationship between a preprocessing manner, a quantity of DMRS resources, and the DMRS resource, and the quantity of DMRS resources of the DMRSs corresponding to the at least two first preprocessed spatial flows and the preprocessing manner corresponding to the first original spatial flow are uniquely corresponding to one group of DMRS resources. The first transmit end device may determine the DMRS resources based on the quantity of DMRS resources and the preprocessing manner corresponding to the first original spatial flow that are indicated by the receive end device, and the mapping relationship. For example, the base station 01 indicates, to the UE-02 by using downlink signaling, that the preprocessing manner corresponding to the first original spatial flow is the space time transmit diversity processing and the quantity of DMRS resources is 2. The mapping relationship is as follows: For a spatial flow whose preprocessing manner is the space time transmit diversity processing and whose quantity of DMRS resources is 2, data needs to be sent by using resources, identified by a designated sequence A, on a DMRS port whose port number is x+1 and a DMRS port whose port number is x.

It should be noted that in this embodiment of this application, the downlink signaling may be, for example, downlink control information (English: Downlink Control Information, DCI for short) in the LTE standard. The UE may blindly detect the DCI on a physical downlink control channel (English: Physical Downlink Control Channel, PDCCH for short), to receive information about a DMRS resource and information about a preprocessing manner that are sent by the base station. A specific blind detection process is clearly described in the prior art, and is not described herein in this embodiment of this application.

It should be noted that in a specific implementation process, a precoding process of a preprocessed spatial flow and a precoding process of a demodulation reference signal may be performed together. For example, it may be understood that a demodulation reference signal is inserted into a corresponding preprocessed spatial flow, or a demodulation reference signal is mixed with a preprocessed spatial flow, so that the demodulation reference signal and the preprocessed spatial flow are precoded together. In this way, a precoding result includes both a precoded data flow and a precoded demodulation reference signal, and the precoded data flow and the precoded demodulation reference signal are transmitted together. It should be noted that for precoding processes and transmission processes of a spatial flow and a demodulation reference signal, refer to the prior art. The foregoing processes are clearly and completely described in the prior art. Therefore, details are not described herein. In FIG. 4-1A, FIG. 4-1B, and FIG. 4-1C, the precoding process of the preprocessed spatial flow and the precoding process of the demodulation reference signal are separately described, and a transmission process of a precoded spatial flow obtained after precoding and a transmission process of a precoded demodulation reference signal obtained after precoding are separately described, to clearly present processing processes of the preprocessed spatial flow according to the claimed invention and the demodulation reference signal, and a processing order of the preprocessed spatial flow and the demodulation reference signal constitutes no limitation on this application.

Step 405: The second transmit end device precodes at least two second preprocessed spatial flows to obtain a plurality of precoded data flows, where the at least two second preprocessed spatial flows are obtained by preprocessing a second original spatial flow.

The second transmit end device may be the UE-03 in the implementation environment shown in FIG. 1. Similar to the first original spatial flow in step 401, the second original spatial flow may be a spatial flow obtained after layer mapping, and the second original spatial flow may be any modulated symbol flow obtained after processing such as modulation. For a specific description process, refer to step 401. Details are not described herein again in this embodiment of this application.

In this embodiment of this application, the second transmit end device (for example, the UE-03) may precode the at least two second preprocessed spatial flows, to obtain the plurality of precoded data flows. The at least two second preprocessed spatial flows are obtained by the second transmit end device by preprocessing the second original spatial flow. The preprocessing may include the transmit diversity processing or the transmit diversity-based spatial multiplexing processing. For related descriptions of the transmit diversity processing and the transmit diversity-based spatial multiplexing processing, refer to step 401. Details are not described herein again in this embodiment.

The second transmit end device may precode the at least two second preprocessed spatial flows by using the precoding technology. Each of the at least two second preprocessed spatial flows may be corresponding to one precoding vector, and different second preprocessed spatial flows in the at least two second preprocessed spatial flows are corresponding to different precoding vectors. The second transmit end device may precode the at least two second preprocessed spatial flows by using at least two precoding vectors. Optionally, in this embodiment of this application, the second transmit end device may precode the at least two second preprocessed spatial flows by using an identity matrix or a precoding matrix in which none of elements on a main diagonal are 0 and all the other elements are 0. For a specific implementation process, refer to the process in which the first transmit end device precodes the at least two first preprocessed spatial flows in step 401. Details are not described herein again in this embodiment of this application.

In this embodiment of this application, for example, the at least two second preprocessed spatial flows include a second preprocessed spatial flow 21 and a second preprocessed spatial flow 22. The second preprocessed spatial flow 21 and the second preprocessed spatial flow 22 may be obtained by the second transmit end device by performing space time transmit diversity processing, space-frequency transmit diversity processing, or space-time-frequency transmit diversity processing on a second original spatial flow 2, or may be obtained by the second transmit end device by performing cyclic delay transmit diversity processing on a second original spatial flow 2, or may be obtained by the second transmit end device by performing open-loop transmit diversity processing on a second original spatial flow 2, or may be obtained by the second transmit end device by performing transmit diversity-based spatial multiplexing processing on a second original spatial flow 2. When the second preprocessed spatial flow 21 and the second preprocessed spatial flow 22 are obtained by the second transmit end device by performing space time transmit diversity processing, space-frequency transmit diversity processing, or space-time-frequency transmit diversity processing on the second original spatial flow 2, the second transmit end device may be a device that performs data transmission by using the BTD transmission solution. When the second preprocessed spatial flow 21 and the second preprocessed spatial flow 22 are obtained by the second transmit end device by performing cyclic delay transmit diversity processing on the second original spatial flow 2, the second transmit end device may be a device that performs data transmission by using the OLSM transmission solution. When the second preprocessed spatial flow 21 and the second preprocessed spatial flow 22 are obtained by the second transmit end device by performing open-loop transmit diversity processing on the second original spatial flow 2, the second transmit end device may be a device that performs data transmission by using the OLTD transmission solution. When the second preprocessed spatial flow 21 and the second preprocessed spatial flow 22 are obtained by the second transmit end device by performing transmit diversity-based spatial multiplexing processing on the second original spatial flow 2, the second transmit end device may be a device that performs data transmission by using the large-scale delay CDD transmission solution. In this embodiment of this application, that the second preprocessed spatial flow 21 and the second preprocessed spatial flow 22 are obtained by the second transmit end device by performing transmit diversity-based spatial multiplexing processing on the second original spatial flow 2 is used as an example for description. Therefore, the second transmit end device is a device that performs data transmission by using the large-scale delay CDD transmission solution. In this embodiment of this application, when the transmit end device is UE, a base station may indicate a transmission solution to the UE by using downlink signaling, so that the UE can perform data transmission by using the corresponding transmission solution. For example, the base station 01 instructs, by using downlink signaling, the UE-03 to perform data transmission by using the large-scale delay CDD transmission solution. The base station may indicate the transmission solution by using a format of the downlink signaling, or may indicate the transmission solution by using content of the downlink signaling. This is not limited in this embodiment of this application.

In this embodiment of this application, it is assumed that the second transmit end device precodes the second preprocessed spatial flow 21 to obtain a precoded data flow 210, and precodes the second preprocessed spatial flow 22 to obtain a precoded data flow 220. However, it should be noted that, similar to step 401, for ease of description in step 405, a precoded data flow obtained by precoding one spatial flow is marked as one precoded data flow, for example, the precoded data flow 210 and the precoded data flow 220. However, in an actual application, a plurality of precoded data flows may be usually obtained by precoding one spatial flow. A specific quantity of precoded data flows is related to a quantity of physical antennas or a quantity of antenna ports. It can be learned that the precoded data flow 210 and the precoded data flow 220 each indicate a group of precoded data flows, and a quantity of precoded data flows in the group of precoded data flows is related to a quantity of physical antennas or a quantity of antenna ports. Each precoded data flow in the group of precoded data flows is transmitted by using one corresponding physical antenna or antenna port, and the precoded data flow transmitted by using the physical antenna or the antenna port may be considered as a transmit component of a corresponding preprocessed spatial flow on the physical antenna or the antenna port. This part of content is clearly described in the prior art, and is not described herein in this embodiment of this application.

Step 406: The second transmit end device transmits the plurality of precoded data flows to the receive end device.

After obtaining the plurality of precoded data flows, the second transmit end device may transmit the plurality of precoded data flows to the receive end device. The second transmit end device may be the UE-03 in the implementation environment shown in FIG. 1, and the receive end device may be the base station 01 in the implementation environment shown in FIG. 1. For example, the second transmit end device transmits the precoded data flow 210 and the precoded data flow 220 to the receive end device. The second transmit end device may transmit the plurality of precoded data flows to the receive end device by using antenna ports. A specific transmission process is clearly described in the prior art, and is not described herein in this embodiment of this application.

Step 407: The second transmit end device precodes demodulation reference signals of the at least two second preprocessed spatial flows to obtain a plurality of precoded demodulation reference signals.

In this embodiment of this application, each of the at least two second preprocessed spatial flows is corresponding to one demodulation reference signal, and the second transmit end device may precode the demodulation reference signals of the at least two second preprocessed spatial flows, to obtain the plurality of precoded demodulation reference signals.

For example, assuming that the second preprocessed spatial flow 21 is corresponding to a demodulation reference signal S21, and the second preprocessed spatial flow 22 is corresponding to a demodulation reference signal S22, the second transmit end device precodes the demodulation reference signal S21 to obtain a precoded demodulation reference signal S210, and precodes the demodulation reference signal S22 to obtain a precoded demodulation reference signal S220. For a specific implementation process in which the second transmit end device precodes the demodulation reference signals of the at least two second preprocessed spatial flows, refer to the process in which the first transmit end device precodes the demodulation reference signals of the at least two first preprocessed spatial flows in step 403. It should be noted that, similar to the precoded data flow described above, the precoded demodulation reference signal S210 and the precoded demodulation reference signal S220 each indicate a group of precoded demodulation reference signals, and a quantity of precoded demodulation reference signals in the group of precoded demodulation reference signals is related to a quantity of physical antennas or a quantity of antenna ports. Each precoded demodulation reference signal in the group of precoded demodulation reference signals is transmitted by using one corresponding physical antenna or antenna port, and the precoded demodulation reference signal transmitted by using the physical antenna or the antenna port may be considered as a transmit component of a corresponding demodulation reference signal on the physical antenna or the antenna port. This part of content is clearly described in the prior art, and is not described herein in this embodiment of this application.

It should be further noted that, in an actual application, step 405 and step 407 in this embodiment of this application may be performed simultaneously. This is not limited in this embodiment of this application.

Step 408: The second transmit end device transmits the plurality of precoded demodulation reference signals to the receive end device.

After obtaining the plurality of precoded demodulation reference signals, the second transmit end device may transmit the plurality of precoded demodulation reference signals to the receive end device. The second transmit end device may be the UE-03 in the implementation environment shown in FIG. 1, and the receive end device may be the base station 01 in the implementation environment shown in FIG. 1. For example, the second transmit end device transmits the precoded demodulation reference signal S210 and the precoded demodulation reference signal S220 to the receive end device.

It should be noted that in this embodiment of this application, the second transmit end device may be UE, and the receive end device is a base station. Because the at least two second preprocessed spatial flows are obtained by the second transmit end device by preprocessing the second original spatial flow, and the transmitted precoded data flows need to be demodulated by using DMRSs, the second transmit end device needs to learn of a preprocessing manner and DMRS resources to complete data transmission. Before the second transmit end device transmits data, the receive end device (the base station) may designate a preprocessing manner for the second transmit end device and allocate a DMRS resource to the second transmit end device by using downlink signaling. For a specific implementation process in which the receive end device designates the preprocessing manner for the second transmit end device and allocates the DMRS resource to the second transmit end device by using the downlink signaling, refer to the specific implementation process in which the receive end device may designate the preprocessing manner for the first transmit end device and allocate the DMRS resource to the first transmit end device by using the downlink signaling in step 404. Details are not described herein again in this embodiment of this application.

Step 409: The third transmit end device precodes at least one original spatial flow to obtain a plurality of precoded data flows.

The third transmit end device may be the UE-04 in the implementation environment shown in FIG. 1. Similar to the first original spatial flow in step 401, each of the at least one original spatial flow may be a spatial flow obtained after layer mapping, and each original spatial flow may be any modulated symbol flow obtained after processing such as modulation. For a specific description process, refer to step 401. Details are not described herein again in this embodiment of this application.

In this embodiment of this application, the third transmit end device (for example, the UE-04) may precode the at least one original spatial flow, to obtain the plurality of precoded data flows. The third transmit end device may precode the at least one original spatial flow by using the precoding technology. Each of the at least one original spatial flow may be corresponding to one precoding vector, and different original spatial flows in the at least one original spatial flow are corresponding to different precoding vectors. The third transmit end device may precode the at least one original spatial flow by using at least one precoding vector. Optionally, in this embodiment of this application, the third transmit end device may precode the at least one original spatial flow by using an identity matrix or a precoding matrix in which none of elements on a main diagonal are 0 and all the other elements are 0. For a specific implementation process, refer to the process in which the first transmit end device precodes the at least two first preprocessed spatial flows in step 401. Details are not described herein again in this embodiment of this application.

In this embodiment of this application, for example, the at least one original spatial flow includes an original spatial flow 3 and an original spatial flow 4. The original spatial flow 3 and the original spatial flow 4 may be obtained by the third transmit end device through layer mapping, and the third transmit end device may be a device that performs data transmission by using the CLSM transmission solution. In this embodiment of this application, when the transmit end device is UE, a base station may indicate a transmission solution to the UE by using downlink signaling, so that the UE can perform data transmission by using the corresponding transmission solution. For example, the base station 01 instructs, by using downlink signaling, the UE-04 to perform data transmission by using the CLSM transmission solution. The base station may indicate the transmission solution by using a format of the downlink signaling, or may indicate the transmission solution by using content of the downlink signaling. This is not limited in this embodiment of this application.

In this embodiment of this application, it is assumed that the third transmit end device precodes the original spatial flow 3 to obtain a precoded data flow 30, and precodes the original spatial flow 4 to obtain a precoded data flow 40. However, it should be noted that, similar to step 401, for ease of description in step 409, a precoded data flow obtained by precoding one spatial flow is marked as one precoded data flow, for example, the precoded data flow 30 and the precoded data flow 40. However, in an actual application, a plurality of precoded data flows may be usually obtained by precoding one spatial flow. A specific quantity of precoded data flows is related to a quantity of physical antennas or a quantity of antenna ports. It can be learned that the precoded data flow 30 and the precoded data flow 40 each indicate a group of precoded data flows, and a quantity of precoded data flows in the group of precoded data flows is related to a quantity of physical antennas or a quantity of antenna ports. Each precoded data flow in the group of precoded data flows is transmitted by using one corresponding physical antenna or antenna port, and the precoded data flow transmitted by using the physical antenna or the antenna port may be considered as a transmit component of a corresponding preprocessed spatial flow on the physical antenna or the antenna port. This part of content is clearly described in the prior art, and is not described herein in this embodiment of this application.

Step 410: The third transmit end device transmits the plurality of precoded data flows to the receive end device.

After obtaining the plurality of precoded data flows, the third transmit end device may transmit the plurality of precoded data flows to the receive end device. The third transmit end device may be the UE-04 in the implementation environment shown in FIG. 1, and the receive end device may be the base station 01 in the implementation environment shown in FIG. 1. For example, the third transmit end device transmits the precoded data flow 30 and the precoded data flow 40 to the receive end device. The third transmit end device may transmit the plurality of precoded data flows to the receive end device by using antenna ports. A specific transmission process is clearly described in the prior art, and is not described herein in this embodiment of this application.

Step 411: The third transmit end device precodes a demodulation reference signal of the at least one original spatial flow to obtain a plurality of precoded demodulation reference signals.

In this embodiment of this application, each of the at least one original spatial flow is corresponding to one demodulation reference signal, and the third transmit end device may precode the demodulation reference signal of the at least one original spatial flow, to obtain the plurality of precoded demodulation reference signals.

For example, assuming that the original spatial flow 3 is corresponding to a demodulation reference signal S3, and the original spatial flow 4 is corresponding to a demodulation reference signal S4, the third transmit end device precodes the demodulation reference signal S3 to obtain a precoded demodulation reference signal S30, and precodes the demodulation reference signal S4 to obtain a precoded demodulation reference signal S40. For a specific implementation process in which the third transmit end device precodes the demodulation reference signal of the at least one original spatial flow, refer to the process in which the first transmit end device precodes the demodulation reference signals of the at least two first preprocessed spatial flows in step 403. It should be noted that, similar to the precoded data flow described above, the precoded demodulation reference signal S30 and the precoded demodulation reference signal S40 each indicate a group of precoded demodulation reference signals, and a quantity of precoded demodulation reference signals in the group of precoded demodulation reference signals is related to a quantity of physical antennas or a quantity of antenna ports. Each precoded demodulation reference signal in the group of precoded demodulation reference signals is transmitted by using one corresponding physical antenna or antenna port, and the precoded demodulation reference signal transmitted by using the physical antenna or the antenna port may be considered as a transmit component of a corresponding demodulation reference signal on the physical antenna or the antenna port. This part of content is clearly described in the prior art, and is not described herein in this embodiment of this application.

It should be noted that, in an actual application, step 409 and step 411 in this embodiment of this application may be performed simultaneously. This is not limited in this embodiment of this application.

Step 412: The third transmit end device transmits the plurality of precoded demodulation reference signals to the receive end device.

After obtaining the plurality of precoded demodulation reference signals, the third transmit end device may transmit the plurality of precoded demodulation reference signals to the receive end device. The third transmit end device may be the UE-04 in the implementation environment shown in FIG. 1, and the receive end device may be the base station 01 in the implementation environment shown in FIG. 1. For example, the third transmit end device transmits the precoded demodulation reference signal S30 and the precoded demodulation reference signal S40 to the receive end device.

It should be noted that in this embodiment of this application, the third transmit end device may be UE, and the receive end device is a base station. The third transmit end device needs to transmit the precoded data flows to the receive end device by using DMRS resources, and the transmitted precoded data flows need to be demodulated by using DMRSs. Therefore, the third transmit end device needs to learn of the DMRS resources to complete data transmission. Therefore, before the third transmit end device transmits data, the receive end device (the base station) may allocate a DMRS resource to the third transmit end device by using downlink signaling. For a specific implementation in which the receive end device may allocate the DMRS resource to the third transmit end device by using the downlink signaling, refer to the prior art. Details are not described herein in this embodiment of this application.

It should be noted that the first transmit end device, the second transmit end device, and the third transmit end device are a plurality of devices that are simultaneously scheduled in a same scheduling period in the MU-MIMO scenario. Data transmission processes of the first transmit end device, the second transmit end device, and the third transmit end device are simultaneously performed, and are not limited by an order shown in FIG. 4-1A, FIG. 4-1B, and FIG. 4-1C. The order described in FIG. 4-1A, FIG. 4-1B, and FIG. 4-1C is designed only for ease of description, and is not used to limit a scope of the technical solutions of this application. In addition, for technical details of data transmission performed by the first transmit end device, the second transmit end device, and the third transmit end device in the MU-MIMO scenario, refer to the prior art. Related content is clearly described in the prior art, and therefore is not described herein.

Step 413: The receive end device receives a plurality of precoded data flows, where the plurality of precoded data flows are obtained by precoding a plurality of spatial flows, the plurality of spatial flows include the at least two first preprocessed spatial flows, the at least two second preprocessed spatial flows, and the at least one original spatial flow.

The receive end device may receive the plurality of precoded data flows, the plurality of precoded data flows may be obtained by different transmit end devices by precoding the plurality of spatial flows, and the plurality of spatial flows may include the at least two first preprocessed spatial flows, the at least two second preprocessed spatial flows, and the at least one original spatial flow. The at least two first preprocessed spatial flows are obtained by preprocessing the first original spatial flow, and the at least two second preprocessed spatial flows are obtained by preprocessing the second original spatial flow. It can be learned from the foregoing description that the at least two first preprocessed spatial flows come from the first transmit end device (for example, the UE-02), the at least two second preprocessed spatial flows come from the second transmit end device (for example, the UE-03), and the at least one original spatial flow comes from the third transmit end device (for example, the UE-04).

For example, the receive end device receives the precoded data flow 110, the precoded data flow 120, and the precoded data flow 130 that are transmitted by the first transmit end device, the receive end device receives the precoded data flow 210 and the precoded data flow 220 that are transmitted by the second transmit end device, and the receive end device receives the precoded data flow 30 and the precoded data flow 40 that are transmitted by the third transmit end device. The receive end device may receive, by using antenna ports, the plurality of precoded data flows transmitted by the transmit end devices. A specific receiving process is clearly described in the prior art, and is not described herein in this embodiment of this application.

It should be noted that a person skilled in the art should understand that, in an actual application, when the foregoing precoded data flows arrive at the receive end device through propagation, the precoded data flows received by the receive end device are not the precoded data flows sent by the transmit end devices, but precoded data flows that are sent by the transmit end devices and that are propagated through a channel. The precoded data flows are affected by the channel during propagation, and as a result, the precoded data flows received by the receive end device are different from the precoded data flows sent by the transmit end devices. However, for brief description, in a process of describing this application in this specification, names and numbers used to represent the precoded data flows sent by the transmit end devices are the same as those used to represent the precoded data flows received by the receive end device.

Step 414: The receive end device receives a plurality of precoded demodulation reference signals, where the plurality of precoded demodulation reference signals are obtained by precoding demodulation reference signals of the plurality of spatial flows.

The receive end device may receive the plurality of precoded demodulation reference signals, each of the plurality of spatial flows is corresponding to one demodulation reference signal, and the plurality of precoded demodulation reference signals may be obtained by different transmit end devices by precoding the demodulation reference signals corresponding to the plurality of spatial flows. A precoding vector used to precode each spatial flow is the same as a precoding vector used to precode a demodulation reference signal of the spatial flow.

For example, the receive end device receives the precoded demodulation reference signal S110, the precoded demodulation reference signal S120, and the precoded demodulation reference signal S130 that are transmitted by the first transmit end device, the receive end device receives the precoded demodulation reference signal S210 and the precoded demodulation reference signal S220 that are transmitted by the second transmit end device, and the receive end device receives the precoded demodulation reference signal S30 and the precoded demodulation reference signal S40 that are transmitted by the third transmit end device. The receive end device may receive, by using antenna ports, the plurality of precoded demodulation reference signals transmitted by the transmit end devices. A specific receiving process is clearly described in the prior art, and is not described herein in this embodiment of this application.

It should be noted that, in an actual application, step 413 and step 144 in this embodiment of this application may be performed simultaneously. This is not limited in this embodiment of this application.

Step 415: The receive end device restores the at least two first preprocessed spatial flows, the at least two second preprocessed spatial flows, and the at least one original spatial flow from the plurality of precoded data flows.

Optionally, the receive end device may restore the at least two first preprocessed spatial flows from the plurality of precoded data flows based on the precoded demodulation reference signals of the at least two first preprocessed spatial flows, restore the at least two second preprocessed spatial flows from the plurality of precoded data flows based on the precoded demodulation reference signals of the at least two second preprocessed spatial flows, and restore the at least one original spatial flow from the plurality of precoded data flows based on the precoded demodulation reference signal of the at least one original spatial flow.

In this embodiment of this application, each of the at least two first preprocessed spatial flows, the at least two second preprocessed spatial flows, and the at least one original spatial flow is corresponding to a different precoding vector, each precoding vector is corresponding to one DMRS resource, and different precoding vectors are corresponding to different DMRS resources. The DMRS resource may be at least one of a DMRS port and a designated sequence (for example, a Z-C sequence). A DMRS may be used to demodulate a channel (a precoded channel) because a precoding vector used to precode each spatial flow (any one of the first preprocessed spatial flows, the second preprocessed spatial flows, or the at least one original spatial flow) is the same as a precoding vector used to precode a DMRS corresponding to the spatial flow and the DMRS does not need to be preprocessed. In other words, both a preprocessed spatial flow (the first preprocessed spatial flow or the second preprocessed spatial flow) obtained through preprocessing and an original spatial flow that is not preprocessed are associated with respective DMRSs, and the DMRSs are different from each other. The receive end device may demodulate a received precoded data flow based on a DMRS corresponding to a DMRS port, to obtain a spatial flow.

For example, the receive end device restores the first preprocessed spatial flow 11 based on the precoded demodulation reference signal S110, restores the first preprocessed spatial flow 12 based on the precoded demodulation reference signal S120, restores the first preprocessed spatial flow 13 based on the precoded demodulation reference signal S130, restores the first preprocessed spatial flow 21 based on the precoded demodulation reference signal S210, restores the first preprocessed spatial flow 22 based on the precoded demodulation reference signal S220, restores the original spatial flow 3 based on the precoded demodulation reference signal S30, and restores the first preprocessed spatial flow 4 based on the precoded demodulation reference signal S40. For specific technical details of estimating a precoded channel based on a demodulation reference signal and restoring a spatial flow based on the channel, refer to the prior art. Related content is clearly described in the prior art, and is not described herein in this embodiment of this application.

Step 416: The receive end device restores the first original spatial flow based on the at least two first preprocessed spatial flows.

After the receive end device restores the at least two first preprocessed spatial flows from the plurality of precoded data flows, because the at least two first preprocessed spatial flows are obtained by the first transmit end device by preprocessing the first original spatial flow, the receive end device may restore the first original spatial flow based on the at least two first preprocessed spatial flows. Specifically, the receive end device may first determine the preprocessing manner corresponding to the at least two first preprocessed spatial flows, and further restore the first original spatial flow based on the at least two first preprocessed spatial flows and the preprocessing manner corresponding to the at least two first preprocessed spatial flows. It can be learned from the description in step 404 that the preprocessing manner corresponding to the at least two first preprocessed spatial flows is designated by the receive end device for the first transmit end device. Therefore, the receive end device may determine, based on designation of the receive end device for the first transmit end device, the preprocessing manner corresponding to the at least two first preprocessed spatial flows. Optionally, the preprocessing manner corresponding to the at least two first preprocessed spatial flows may be the space time transmit diversity processing, and the receive end device restores the first original spatial flow 1 based on the first preprocessed spatial flow 11, the first preprocessed spatial flow 12, the first preprocessed spatial flow 13, and the space time transmit diversity processing.

Step 417: The receive end device restores the second original spatial flow based on the at least two second preprocessed spatial flows.

After the receive end device restores the at least two second preprocessed spatial flows from the plurality of precoded data flows, because the at least two second preprocessed spatial flows are obtained by the second transmit end device by preprocessing the second original spatial flow, the receive end device may restore the second original spatial flow based on the at least two second preprocessed spatial flows. Specifically, the receive end device may first determine the preprocessing manner corresponding to the at least two second preprocessed spatial flows, and further restore the second original spatial flow based on the at least two second preprocessed spatial flows and the preprocessing manner corresponding to the at least two second preprocessed spatial flows. It can be learned from the description in step 405 that the preprocessing manner corresponding to the at least two second preprocessed spatial flows is designated by the receive end device for the second transmit end device. Therefore, the receive end device may determine, based on designation of the receive end device for the second transmit end device, the preprocessing manner corresponding to the at least two second preprocessed spatial flows. Optionally, the preprocessing manner corresponding to the at least two second preprocessed spatial flows may be the transmit diversity-based spatial multiplexing processing, and the receive end device restores the second original spatial flow 2 based on the second preprocessed spatial flow 21, the second preprocessed spatial flow 22, and the space time transmit diversity processing.

It should be noted that an order of the steps of the data transmission method provided in this embodiment of this application may be properly adjusted, and steps may be added, removed, combined, divided, or the like based on situations. Any modified method readily figured out by a person skilled in the art within the technical scope disclosed in this application shall fall within the protection scope of this application. Details are not described herein.

In conclusion, according to the data transmission method provided in this embodiment of this application, the transmit end device precodes the at least two first preprocessed spatial flows to obtain the plurality of precoded data flows, and transmits the plurality of precoded data flows. The at least two first preprocessed spatial flows are obtained by preprocessing the first original spatial flow. The receive end device restores the at least two first preprocessed spatial flows from the plurality of precoded data flows, and restores the first original spatial flow based on the at least two first preprocessed spatial flows. The at least two first preprocessed spatial flows are obtained by preprocessing the first original spatial flow. Therefore, a plurality of UEs can perform spatial multiplexing on a time-frequency resource. This helps to resolve a prior-art problem that a plurality of UEs cannot perform spatial multiplexing on a time-frequency resource and a system throughput is affected, and improves the system throughput.

In LTE or LTE-A, both a quantity of antennas of the transmit end device and a quantity of antennas of the receive end device continuously and rapidly increase. An increase in the quantity of antennas may provide a higher spatial degree of freedom. This provides a possibility for diverse uplink transmission solutions. According to the data transmission method provided in this embodiment of this application, based on the diverse uplink transmission solutions, different UEs perform data transmission by using different transmission solutions, so that scheduling flexibility is improved, and different UEs can perform spatial multiplexing on a time-frequency resource.

According to the data transmission method provided in this embodiment of this application, a beamforming gain of the transmit end device and/or a beamforming gain of the receive end device may be improved by performing both preprocessing and precoding on an original spatial flow.

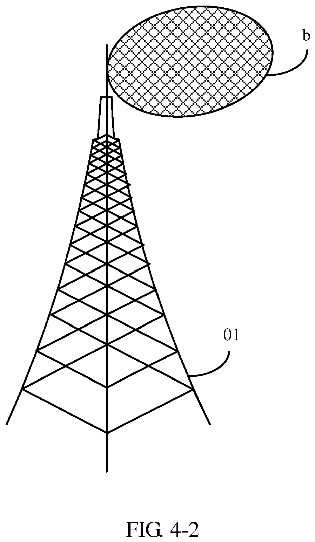

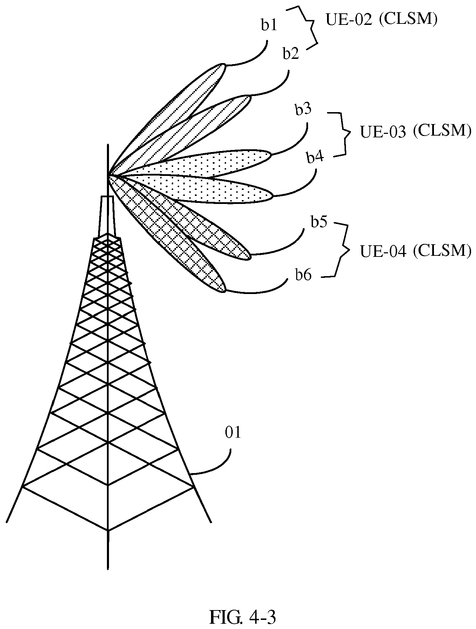

With reference to FIG. 4-2 to FIG. 4-4, the following briefly describes a difference between a data transmission method provided in the prior art and a data transmission method provided in an embodiment of this application. FIG. 4-2 is a schematic diagram of a data transmission method according to the prior art. FIG. 4-3 is a schematic diagram of another data transmission method according to the prior art. FIG. 4-4 is a schematic diagram of a data transmission method according to an embodiment of this application.

Referring to FIG. 4-2, in the prior art, when a base station 01 schedules UE-02 (not shown in FIG. 4-2) to perform data transmission by using an OLTD transmission solution, cell-level signal coverage is formed in the OLTD transmission solution. Consequently, the UE-02 exclusively occupies a beam b of the base station 01 (for example, the UE-02 may perform cell-level or sector-level coverage by using the beam b), and UE, other than the UE-02, served by the base station 01 cannot use the beam b. Therefore, when the UE-02 performs data transmission by using the OLTD transmission solution, different UEs served by the base station 01 cannot perform spatial multiplexing on a time-frequency resource, utilization of the time-frequency resource is relatively low, spectral efficiency is relatively low, and a system throughput is affected.

Referring to FIG. 4-3, in the prior art, a base station 01 has a beam b1, a beam b2, a beam b3, a beam b4, a beam b5, and a beam b6 (the beam b1, the beam b2, the beam b3, the beam b4, the beam b5, and the beam b6 may be beams obtained through precoding, in other words, each of the beam b1, the beam b2, the beam b3, the beam b4, the beam b5, and the beam b6 may be corresponding to one precoding vector), and the base station 01 may further have DMRS ports whose port numbers are respectively x, x+1, ..., y (typically, port numbers in a standard are consecutive). The base station 01 may schedule UE-02, UE-03, and UE-04 to perform data transmission by using a transmission solution. In the prior art, the base station 01 schedules the UE-02, the UE-03, and the UE-04 to perform data transmission by using a same transmission solution, and allocates the DMRS ports to the UEs. For example, the base station 01 schedules all the UE-02, the UE-03, and the UE-04 to perform data transmission by using a CLSM transmission solution, allocates DMRS ports whose port numbers are x and x+1 to the UE-02, allocates DMRS ports whose port numbers are x+2 and x+3 to the UE-03, and allocates DMRS ports whose port numbers are x+4, ..., y to the UE-04. After the base station 01 schedules the UEs and allocates the DMRS ports to the UEs, the UEs perform data transmission by using the same transmission solution. For example, the base station 01, the UE-02, the UE-03, and the UE-04 all perform data transmission by using the CLSM transmission solution, the UE-02 occupies the beam b1 and the beam b2 of the base station 01, the UE-03 occupies the beam b3 and the beam b4 of the base station 01, and the UE-04 occupies the beam b5 and the beam b6 of the base station 01. When the base station 01 schedules all the UE-02, the UE-03, and the UE-04 to perform data transmission by using the CLSM transmission solution, spatial multiplexing on a time-frequency resource can be implemented, and spectral efficiency of a system can be improved. However, because the base station 01 schedules all the UE-02, the UE-03, and the UE-04 to perform data transmission by using the CLSM transmission solution, scheduling flexibility of the base station 01 is relatively low. In addition, when a channel environment is diversified, an optimal scheduling result cannot be achieved, and spectral efficiency is affected.

Referring to FIG. 4-4, in an embodiment of the claimed invention a base station 01 has a beam b1, a beam b2, a beam b3, a beam b4, a beam b5, and a beam b6 (the beam b1, the beam b2, the beam b3, the beam b4, the beam b5, and the beam b6 may be beams obtained through precoding, in other words, each of the beam b1, the beam b2, the beam b3, the beam b4, the beam b5, and the beam b6 may be corresponding to one precoding vector), and the base station 01 may further have DMRS ports whose port numbers are respectively $x$, $x+1$, ..., $y$ (typically, port numbers in a standard are consecutive). The base station 01 may instruct, by using downlink signaling, UE-02, UE-03, and UE-04 to perform data transmission by using corresponding transmission solutions, and the base station 01 may allocate the DMRS ports to the UEs. The base station 01 may indicate a transmission solution by using a format of the downlink signaling, or may indicate a transmission solution by using content of the downlink signaling. For example, the base station 01 instructs, by using downlink signaling, the UE-02 to perform data transmission by using a BTD transmission solution, and allocates DMRS ports whose port numbers are $x$ and $x+1$ to the UE-02. The base station 01 instructs, by using downlink signaling, the UE-03 to perform data transmission by using a CDD-based spatial multiplexing transmission solution, and allocates DMRS ports whose port numbers are $x$ and $x+2$ to the UE-03. The base station 01 instructs, by using downlink signaling, the UE-04 to perform data transmission by using a CLSM transmission solution, and allocates DMRS ports whose port numbers are $x$ and $y$ to the UE-04. The UEs may perform data transmission by using the corresponding transmission solutions. For example, the base station 01 and the UE-02 perform data transmission by using the BTD transmission solution, and the beam b1 and the beam b2 of the base station 01 are occupied.

The base station 01 and the UE-03 perform data transmission by using the CDD-based spatial multiplexing transmission solution, and the beam b3 and the beam b4 of the base station 01 are occupied. The base station 01 and the UE-04 perform data transmission by using the CLSM transmission solution, and the beam b5 and the beam b6 of the base station 01 are occupied. Because the UE-02, the UE-03, and the UE-04 perform data transmission by using different transmission solutions, scheduling flexibility of the base station 01 is relatively high. In addition, when a channel environment is diversified, an optimal scheduling result can be achieved, and spectral efficiency is improved.

It should be noted that in this embodiment of this application, when data transmission is performed by using the BTD transmission solution and the CDD-based spatial multiplexing transmission solution, a corresponding transmit end device needs to preprocess an original spatial flow. Therefore, to help the UE-02 and the UE-03 to preprocess original spatial flows, the base station 01 further needs to indicate corresponding preprocessing manners to the UE-02 and the UE-03 by using downlink signaling. For example, the base station indicates SFBC to the UE-02 and indicates CDD to the UE-03 by using the downlink signaling.

It should be further noted that, in this embodiment of this application, the DMRS ports allocated by the base station 01 to the UE-02, the DMRS ports allocated by the base station 01 to the UE-03, and the DMRS ports allocated by the base station 01 to the UE-04 each include a DMRS port whose port number is $x$. In other words, the UE-02, the UE-03, and the UE-04 perform data transmission by using the same DMRS port. In this case, pilots (DMRS) of different UEs in the UE-02, the UE-03, and the UE-04 may be distinguished by using designated sequences, for example, the designated sequence is a Z-C sequence. For a specific distinguishing process, refer to the prior art. Details are not described herein in this embodiment of this application.

The following describes an embodiment of a device in this application, and the device may be configured to perform the method embodiment of this application. For details not disclosed in the embodiment of the device in this application, refer to the method embodiment of this application.

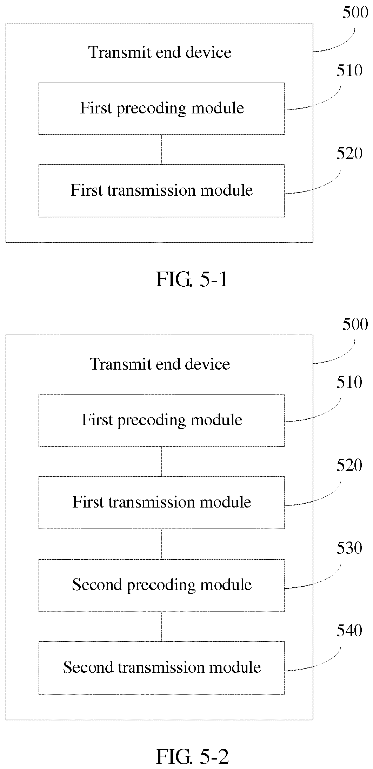

FIG. 5-1 is a block diagram of a transmit end device 500 according to an embodiment of this application. The transmit end device 500 may be implemented, by using software, hardware, or a combination thereof, as a part or all of any UE (for example, the UE-02) in the implementation environment shown in FIG. 1. Referring to FIG. 5-1, the transmit end device 500 may include but is not limited to:

a first precoding module 510, configured to precode at least two first preprocessed spatial flows to obtain a plurality of precoded data flows, where the at least two first preprocessed spatial flows are obtained by preprocessing a first original spatial flow; and
a first transmission module 520, configured to transmit the plurality of precoded data flows.

Optionally, the preprocessing includes transmit diversity processing.

Optionally, the transmit diversity processing includes any one of space time transmit diversity processing, space-frequency transmit diversity processing, and space-time-frequency transmit diversity processing.

Optionally, the transmit diversity processing includes cyclic delay transmit diversity processing.

Optionally, the transmit diversity processing includes open-loop transmit diversity processing.

Optionally, the preprocessing includes transmit diversity-based spatial multiplexing processing.

Optionally, the first precoding module 510 is configured to precode the at least two first preprocessed spatial flows by using an identity matrix, to obtain the plurality of precoded data flows, where column vectors of the identity matrix are precoding vectors of the at least two first preprocessed spatial flows.

Optionally, different first preprocessed spatial flows in the at least two first preprocessed spatial flows are corresponding to different precoding vectors, each precoding vector is corresponding to one demodulation reference signal DMRS port, and different precoding vectors are corresponding to different DMRS ports, or at least two precoding vectors are corresponding to a same DMRS port, and precoding vectors corresponding to a same DMRS port have different DMRS sequences.

FIG. 5-2 is a block diagram of another transmit end device 500 according to an embodiment of this application. Referring to FIG. 5-2, on the basis of FIG. 5-1, the transmit end device 500 further includes:

a second precoding module 530, configured to precode demodulation reference signals of the at least two first preprocessed spatial flows to obtain a plurality of precoded demodulation reference signals, where each of the at least two first preprocessed spatial flows is corresponding to one demodulation reference signal; and

a second transmission module 540, configured to transmit the plurality of precoded demodulation reference signals.

In conclusion, according to the transmit end device provided in this embodiment of this application, the at least two first preprocessed spatial flows are precoded to obtain the plurality of precoded data flows, and the plurality of precoded data flows are transmitted. The at least two first preprocessed spatial flows are obtained by preprocessing the first original spatial flow. Therefore, a plurality of UEs can perform spatial multiplexing on a time-frequency resource. This helps to resolve a prior-art problem that a plurality of UEs cannot perform spatial multiplexing on a time-frequency resource and a system throughput is affected, and improves the system throughput.

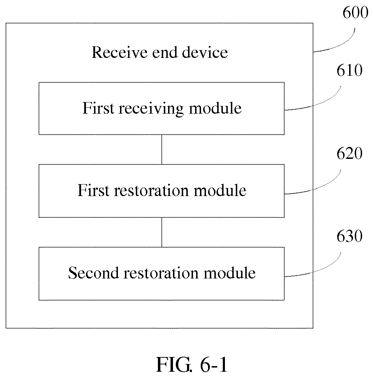

FIG. 6-1 is a block diagram of a receive end device 600 according to an embodiment of this application. The receive end device 600 may be implemented, by using software, hardware, or a combination thereof, as a part or all of the base station 01 in the implementation environment shown in FIG. 1. Referring to FIG. 6-1, the transmit end device 600 may include but is not limited to:

a first receiving module 610, configured to receive a plurality of precoded data flows, where the plurality of precoded data flows are obtained by precoding a plurality of spatial flows, the plurality of spatial flows include at least two first preprocessed spatial flows, and the at least two first preprocessed spatial flows are obtained by preprocessing a first original spatial flow;
a first restoration module 620, configured to restore the at least two first preprocessed spatial flows from the plurality of precoded data flows; and
a second restoration module 630, configured to restore the first original spatial flow based on the at least two first preprocessed spatial flows.

Optionally, the at least two first preprocessed spatial flows come from a first transmit end device.

Optionally, the plurality of spatial flows further include at least two second preprocessed spatial flows, the at least two second preprocessed spatial flows are obtained by preprocessing a second original spatial flow, and the second original spatial flow comes from a second transmit end device.

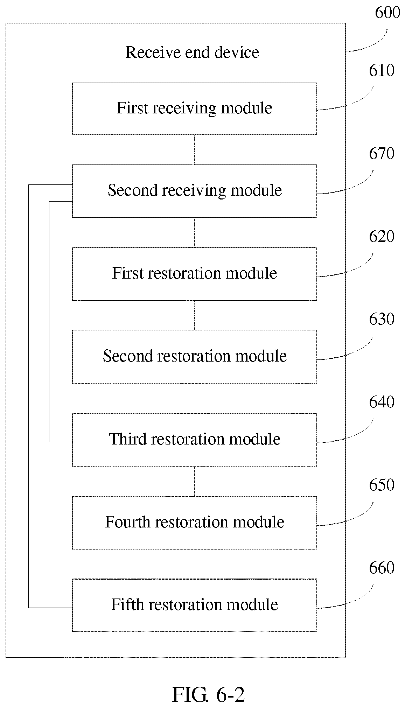

FIG. 6-2 is a block diagram of another receive end device 600 according to an embodiment of this application. Referring to FIG. 6-2, on the basis of FIG. 6-1, the receive end device 600 further includes:

a third restoration module 640, configured to restore the at least two second preprocessed spatial flows from the plurality of precoded data flows; and
a fourth restoration module 650, configured to restore the second original spatial flow based on the at least two second preprocessed spatial flows.

Optionally, the plurality of spatial flows further include at least one original spatial flow, and the at least one original spatial flow comes from a third transmit end device. Still referring to FIG. 6-2, the receive end device 600 further includes:
a fifth restoration module 660, configured to restore the at least one original spatial flow from the plurality of precoded data flows.

Optionally, the preprocessing includes transmit diversity processing.

Optionally, the transmit diversity processing includes any one of space time transmit diversity processing, space-frequency transmit diversity processing, or space-time-frequency transmit diversity processing.

Optionally, the transmit diversity processing includes cyclic delay transmit diversity processing.

Optionally, the transmit diversity processing includes open-loop transmit diversity processing.

Optionally, the preprocessing includes transmit diversity-based spatial multiplexing processing.

Optionally, different spatial flows in the plurality of spatial flows are corresponding to different precoding vectors, each precoding vector is corresponding to one demodulation reference signal DMRS resource, and different precoding vectors are corresponding to different DMRS resources. Still referring to FIG. 6-2, the receive end device 600 further includes:

a second receiving module 670, configured to receive a plurality of precoded demodulation reference signals, where the plurality of precoded demodulation reference signals are obtained by precoding demodulation reference signals of the plurality of spatial flows, and each of the plurality of spatial flows is corresponding to one demodulation reference signal.

The first restoration module 620 is configured to restore the at least two first preprocessed spatial flows from the plurality of precoded data flows based on precoded demodulation reference signals of the at least two first preprocessed spatial flows.

The third restoration module 640 is configured to restore the at least two second preprocessed spatial flows from the plurality of precoded data flows based on precoded demodulation reference signals of the at least two second preprocessed spatial flows.

The fifth restoration module 660 is configured to restore the at least one original spatial flow from the plurality of precoded data flows based on a precoded demodulation reference signal of the at least one original spatial flow.

Optionally, the DMRS resource includes at least one of a DMRS port and a designated sequence.

In conclusion, according to the receive end device provided in this embodiment of this application, the plurality of precoded data flows are received, the at least two first preprocessed spatial flows are restored from the plurality of precoded data flows, and the first original spatial flow is restored based on the at least two first preprocessed spatial flows. The at least two first preprocessed spatial flows are obtained by preprocessing the first original spatial flow. Therefore, a plurality of UEs can perform spatial multiplexing on a time-frequency resource. This helps to resolve a prior-art problem that a plurality of UEs cannot perform spatial multiplexing on a time-frequency resource and a system throughput is affected, and improves the system throughput.

It should be noted that when the transmit end device and the receive end device provided in the foregoing embodiments transmit data, division of the foregoing functional modules is used only as an example for description. In an actual application, the foregoing functions may be allocated to different functional modules for implementation based on a requirement. In other words, an internal structure of a device is divided into different functional modules to implement all or some functions described above. In addition, embodiments of the transmit end device, the receive end device, and the data transmission method provided in the foregoing embodiments pertain to a same idea. For a specific implementation process, refer to the method embodiment. Details are not described herein again.

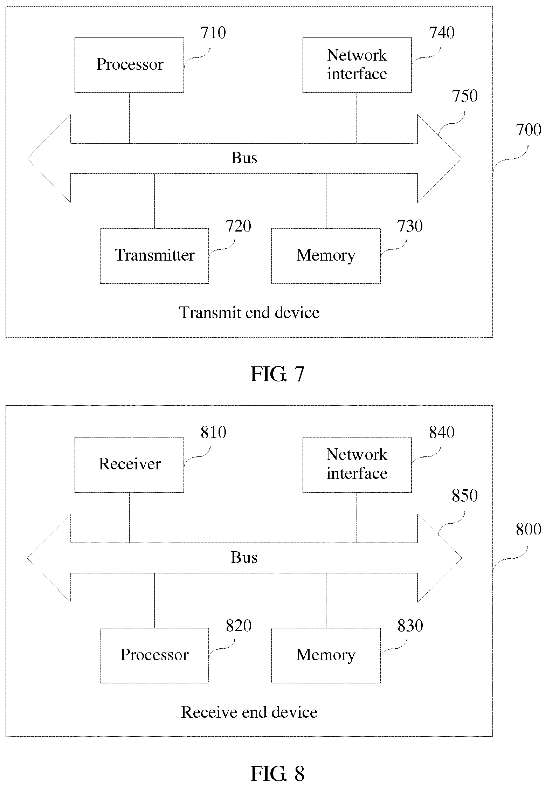

FIG. 7 is a block diagram of a transmit end device 700 according to an embodiment of this application. The transmit end device 700 may be any UE (for example, the UE-02) in the implementation environment shown in FIG. 1, and is configured to perform a part of the method provided in the embodiment shown in FIG. 4-1A, FIG. 4-1B, and FIG. 4-1C and all of the method provided in the embodiment shown in FIG. 2. Referring to FIG. 7, the transmit end device 700 may include a processor 710, a transmitter 720, a memory 730, and a network interface 740. The processor 710, the transmitter 720, the memory 730, and the network interface 740 are connected by using a bus 750.

The processor 710 includes one or more processing cores. The processor 710 runs a software program and a unit to execute various function applications and process data.

There may be a plurality of network interfaces 740, and the network interface 740 is used by the transmit end device 700 to communicate with another storage device or network device. The network interface 740 is optional. In an actual application, the transmit end device 700 may communicate with another storage device or network device by using the transmitter 720. Therefore, the transmit end device 700 may not include the network interface. This is not limited in this embodiment of this application.

The processor 710 is configured to precode at least two first preprocessed spatial flows to obtain a plurality of precoded data flows, where the at least two first preprocessed spatial flows are obtained by preprocessing a first original spatial flow.

The transmitter 720 is configured to transmit the plurality of precoded data flows.

Optionally, the preprocessing includes transmit diversity processing.

Optionally, the transmit diversity processing includes any one of space time transmit diversity processing, space-frequency transmit diversity processing, and space-time-frequency transmit diversity processing.

Optionally, the transmit diversity processing includes cyclic delay transmit diversity processing.

Optionally, the transmit diversity processing includes open-loop transmit diversity processing.

Optionally, the preprocessing includes transmit diversity-based spatial multiplexing processing.

Optionally, the processor 710 is configured to precode the at least two first preprocessed spatial flows by using an identity matrix, to obtain the plurality of precoded data flows, where column vectors of the identity matrix are precoding vectors of the at least two first preprocessed spatial flows.

Optionally, different first preprocessed spatial flows in the at least two first preprocessed spatial flows are corresponding to different precoding vectors, each precoding vector is corresponding to one demodulation reference signal DMRS port, and different precoding vectors are corresponding to different DMRS ports, or at least two precoding vectors are corresponding to a same DMRS port, and precoding vectors corresponding to a same DMRS port have different DMRS sequences.

The processor 710 is configured to precode demodulation reference signals of the at least two first preprocessed spatial flows to obtain a plurality of precoded demodulation reference signals, where each of the at least two first preprocessed spatial flows is corresponding to one demodulation reference signal.

The transmitter 720 is configured to transmit the plurality of precoded demodulation reference signals.

In conclusion, according to the transmit end device provided in this embodiment of this application, the at least two first preprocessed spatial flows are precoded to obtain the plurality of precoded data flows, and the plurality of precoded data flows are transmitted. The at least two first preprocessed spatial flows are obtained by preprocessing the first original spatial flow. Therefore, a plurality of UEs can perform spatial multiplexing on a time-frequency resource. This helps to resolve a prior-art problem that a plurality of UEs cannot perform spatial multiplexing on a time-frequency resource and a system throughput is affected, and improves the system throughput.

FIG. 8 is a block diagram of a receive end device 800 according to an embodiment of this application. The receive end device 800 may be the base station 01 in the implementation environment shown in FIG. 1, and is configured to perform a part of the method provided in the embodiment shown in FIG. 4-1A, FIG. 4-1B, and FIG. 4-1C and all of the method provided in the embodiment shown in FIG. 3. Referring to FIG. 8, the receive end device 800 may include a receiver 810, a processor 820, a memory 830, and a network interface 840. The receiver 810, the processor 820, the memory 830, and the network interface 840 are connected by using a bus 850.

The processor 820 includes one or more processing cores. The processor 820 runs a software program and a unit to execute various function applications and process data.

There may be a plurality of network interfaces 840, and the network interface 840 is used by the receive end device 800 to communicate with another storage device or network device. The network interface 840 is optional. In an actual application, the receive end device 800 may communicate with another storage device or network device by using the receiver 810. Therefore, the receive end device 800 may not include the network interface. This is not limited in this embodiment of this application.

The receiver 810 is configured to receive a plurality of precoded data flows, where the plurality of precoded data flows are obtained by precoding a plurality of spatial flows, the plurality of spatial flows include at least two first preprocessed spatial flows, and the at least two first preprocessed spatial flows are obtained by preprocessing a first original spatial flow.

The processor 820 is configured to restore the at least two first preprocessed spatial flows from the plurality of precoded data flows.

The processor 820 is configured to restore the first original spatial flow based on the at least two first preprocessed spatial flows.

Optionally, the at least two first preprocessed spatial flows come from a first transmit end device.

Optionally, the plurality of spatial flows further include at least two second preprocessed spatial flows, the at least two second preprocessed spatial flows are obtained by preprocessing a second original spatial flow, and the second original spatial flow comes from a second transmit end device.

The processor 820 is configured to restore the at least two second preprocessed spatial flows from the plurality of precoded data flows.

The processor 820 is configured to restore the second original spatial flow based on the at least two second preprocessed spatial flows.

Optionally, the plurality of spatial flows further include at least one original spatial flow, and the at least one original spatial flow comes from a third transmit end device.

The processor 820 is configured to restore the at least one original spatial flow from the plurality of precoded data flows.

Optionally, the preprocessing includes transmit diversity processing.

Optionally, the transmit diversity processing includes any one of space time transmit diversity processing, space-frequency transmit diversity processing, or space-time-frequency transmit diversity processing.

Optionally, the transmit diversity processing includes cyclic delay transmit diversity processing.

Optionally, the transmit diversity processing includes open-loop transmit diversity processing.

Optionally, the preprocessing includes transmit diversity-based spatial multiplexing processing.

Optionally, different spatial flows in the plurality of spatial flows are corresponding to different precoding vectors, each precoding vector is corresponding to one demodulation reference signal DMRS resource, and different precoding vectors are corresponding to different DMRS resources.

The receiver 810 is configured to receive a plurality of precoded demodulation reference signals. The plurality of precoded demodulation reference signals are obtained by precoding demodulation reference signals of the plurality of spatial flows, and each of the plurality of spatial flows is corresponding to one demodulation reference signal.

The processor 820 is configured to restore the at least two first preprocessed spatial flows from the plurality of precoded data flows based on precoded demodulation reference signals of the at least two first preprocessed spatial flows.

The processor 820 is configured to restore the at least two second preprocessed spatial flows from the plurality of precoded data flows based on precoded demodulation reference signals of the at least two second preprocessed spatial flows.

The processor 820 is configured to restore the at least one original spatial flow from the plurality of precoded data flows based on a precoded demodulation reference signal of the at least one original spatial flow.

Optionally, the DMRS resource includes at least one of a DMRS port and a designated sequence.

In conclusion, according to the receive end device provided in this embodiment of this application, the plurality of precoded data flows are received, the at least two first preprocessed spatial flows are restored from the plurality of precoded data flows, and the first original spatial flow is restored based on the at least two first preprocessed spatial flows. The at least two first preprocessed spatial flows are obtained by preprocessing the first original spatial flow. Therefore, a plurality of UEs can perform spatial multiplexing on a time-frequency resource. This helps to resolve a prior-art problem that a plurality of UEs cannot perform spatial multiplexing on a time-frequency resource and a system throughput is affected, and improves the system throughput.

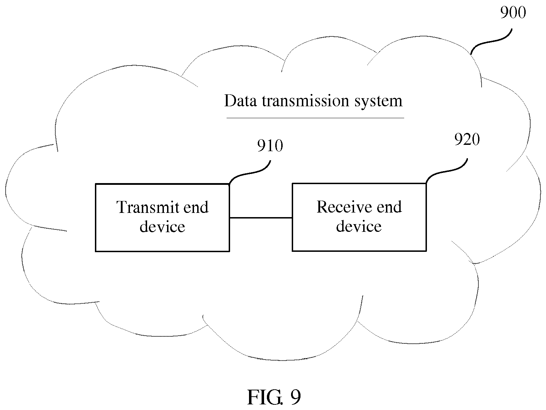

FIG. 9 is a schematic structural diagram of a data transmission system 900 according to an embodiment of this application. Referring to FIG. 9, the data transmission system 900 may include a transmit end device 910 and a receive end device 920.

In a possible implementation, the transmit end device 910 is the transmit end device 500 shown in FIG. 5-1 or FIG. 5-2, and the receive end device 920 is the receive end device 600 shown in FIG. 6-1 or FIG. 6-2.

In another possible implementation, the transmit end device 910 is the transmit end device 700 shown in FIG. 7, and the receive end device 920 is the receive end device 800 shown in FIG. 8.

In conclusion, according to the data transmission system provided in this embodiment of this application, the transmit end device precodes at least two first preprocessed spatial flows to obtain a plurality of precoded data flows, and transmits the plurality of precoded data flows. The at least two first preprocessed spatial flows are obtained by preprocessing a first original spatial flow. The receive end device restores the at least two first preprocessed spatial flows from the plurality of precoded data flows, and restores the first original spatial flow based on the at least two first preprocessed spatial flows. The at least two first preprocessed spatial flows are obtained by preprocessing the first original spatial flow. Therefore, a plurality of UEs can perform spatial multiplexing on a time-frequency resource. This helps to resolve a prior-art problem that a plurality of UEs cannot perform spatial multiplexing on a time-frequency resource and a system throughput is affected, and improves the system throughput.

An embodiment of this application further provides a computer-readable storage medium. The computer-readable storage medium stores an instruction. When the computer-readable storage medium runs on a computer, the computer performs related steps in the data sending method provided in the embodiment shown in FIG. 2 and the data transmission method provided in the embodiment shown in FIG. 4-1A, FIG. 4-1B, and FIG. 4-1C.

An embodiment of this application further provides a computer-readable storage medium. The computer-readable storage medium stores an instruction. When the computer-readable storage medium runs on a computer, the computer performs related steps in the data receiving method provided in the embodiment shown in FIG. 3 and the data transmission method provided in the embodiment shown in FIG. 4-1A, FIG. 4-1B, and FIG. 4-1C.

An embodiment of this application further provides a computer program product including an instruction. When the computer program product runs on a computer, the computer performs related steps in the data sending method provided in the embodiment shown in FIG. 2 and the data transmission method provided in the embodiment shown in FIG. 4-1A, FIG. 4-1B, and FIG. 4-1C.

An embodiment of this application further provides a computer program product including an instruction. When the computer program product runs on a computer, the computer performs related steps in the data receiving method provided in the embodiment shown in FIG. 3 and the data transmission method provided in the embodiment shown in FIG. 4-1A, FIG. 4-1B, and FIG. 4-1C.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may understand that all or some steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made without departing from the principle of this application shall fall within the protection scope of this application, as defined by the appended claims.

**Claims**

1. A data sending method, wherein the method comprises:

precoding, by a first transmit end device, at least two first preprocessed spatial flows to obtain a plurality of first precoded data flows, wherein the at least two first preprocessed spatial flows are obtained by preprocessing a first original spatial flow; and
transmitting, by the first transmit end device, the plurality of first precoded data flows;
precoding, by a second transmit end device, at least two second preprocessed spatial flows to obtain a plurality of second precoded data flows, wherein the at least two second preprocessed spatial flows are obtained by preprocessing a second original spatial flow; and
transmitting, by the second transmit end device, the plurality of second precoded data flows;
precoding, by a third transmit end device, at least one third original spatial flow to obtain a plurality of third precoded data flows; and
transmitting, by the third transmit end device, the plurality of third precoded data flows;
wherein the preprocessing comprises different types of transmit diversity processing or transmit diversity-based spatial multiplexing processing; and
wherein each type of transmit diversity processing or transmit diversity-based spatial multiplexing processing corresponds to one transmission solution; and
wherein the first transmit end device, the second transmit end device and the third transmit end device are a plurality of user equipments, the plurality of user equipments are instructed, by using downlink signaling from a base station, to perform data transmission by using different transmission solutions.

2. The method according to claim 1, wherein the transmit diversity processing comprises any one of space time transmit diversity processing, space-frequency transmit diversity processing, and space-time-frequency transmit diversity processing.

3. The method according to claim 1, wherein the transmit diversity processing comprises cyclic delay transmit diversity processing.

4. A data receiving method, wherein the method comprises:

receiving, by a receive end device, a plurality of precoded data flows, wherein the plurality of precoded data flows are obtained by precoding a plurality of spatial flows, the plurality of spatial flows comprise at least two first preprocessed spatial flows, at least two second preprocessed spatial flows, and at least one third original spatial flow, wherein the at least two first preprocessed spatial flows are obtained by preprocessing a first original spatial flow, the at least two second preprocessed spatial flows are obtained by preprocessing a second original spatial flow; wherein the preprocessing comprises different types of transmit diversity processing or transmit diversity-based spatial multiplexing processing; and
wherein each type of transmit diversity processing or transmit diversity-based spatial multiplexing processing corresponds to one transmission solution; and
wherein the receive end device is a base station, the base station instructs, by using downlink signaling, a plurality of user equipments to perform data transmission by using different transmission solutions;
restoring, by the receive end device, the at least two first preprocessed spatial flows, the at least two second preprocessed spatial flows, and the at least one third original spatial flow from the plurality of precoded data flows; and
restoring, by the receive end device, the first original spatial flow based on the at least two first preprocessed spatial flows,
restoring, by the receive end device, the second original spatial flow based on the at least two second preprocessed spatial flows.

5. A receive end device, wherein the receive end device comprises:

a first receiving module, configured to receive a plurality of precoded data flows, wherein the plurality of precoded data flows are obtained by precoding a plurality of spatial flows, the plurality of spatial flows comprise at least two first preprocessed spatial flows, at least two second preprocessed spatial flows, and at least one third original spatial flow, wherein the at least two first preprocessed spatial flows are obtained by preprocessing a first original spatial flow, the at least two second preprocessed spatial flows are obtained by preprocessing a second original spatial flow;
wherein the preprocessing comprises different types of transmit diversity processing or transmit diversity-based spatial multiplexing processing; and

wherein each type of transmit diversity processing or transmit diversity-based spatial multiplexing processing corresponds to one transmission solution; and

wherein the receive end device is a base station, the base station instructs, by using downlink signaling, a plurality of user equipments to perform data transmission by using different transmission solutions;

a first restoration module, configured to restore the at least two first preprocessed spatial flows from the plurality of precoded data flows; and

a second restoration module, configured to restore the first original spatial flow based on the at least two first preprocessed spatial flows; and

a third restoration module, configured to restore the at least two second preprocessed spatial flows from the plurality of precoded data flows; and

a fourth restoration module, configured to restore the second original spatial flow based on the at least two second preprocessed spatial flows; and

a fifth restoration module, configured to restore the at least one third original spatial flow from the plurality of precoded data flows.

6. A data transmission system, wherein the data transmission system comprises a first transmit end device, a second transmit end device, a third transmit end device and the receive end device according to claim 5,

   wherein the first transmit end device comprises:

   a first precoding module, configured to precode at least two first preprocessed spatial flows to obtain a plurality of first precoded data flows, wherein the least two first preprocessed spatial flows are obtained by preprocessing a first original spatial flow; and
   a first transmission module, configured to transmit the plurality of first precoded data flows;

   wherein the second transmit end device comprises:

   a first precoding module, configured to precode at least two second preprocessed spatial flows to obtain a plurality of second precoded data flows, wherein the at least two second preprocessed spatial flows are obtained by preprocessing a second original spatial flow; and
   a first transmission module, configured to transmit the plurality of second precoded data flows;

   wherein the third transmit end device comprises:

   a first precoding module, configured to precode at least one third original spatial flow to obtain a plurality of third precoded data flows; and
   a first transmission module, configured to transmit the plurality of third precoded data flows;

   wherein the preprocessing comprises different types of transmit diversity processing or transmit diversity-based spatial multiplexing processing; and
   wherein each type of transmit diversity processing or transmit diversity-based spatial multiplexing processing corresponds to one transmission solution; and

   wherein the first transmit end device, the second transmit end device and the third transmit end device are a plurality of user equipments and the receive end device is a base station, the base station instructs, by using downlink signaling, the plurality of user equipments to perform data transmission by using different transmission solutions.

7. A receive end device, wherein the receive end device comprises a processor, a network interface, a memory, and a bus, the memory and the network interface are separately connected to the processor by using the bus, the processor is configured to execute an instruction stored in the memory, and the processor executes the instruction to implement the data receiving method according to claim 4.

8. A data transmission system, wherein the data transmission system comprises a first transmit end device, a second transmit end device, a third transmit end device and the receive end device according to claim 7, wherein each of all the three transmit end devices comprises a processor, a network interface, a memory, and a bus, the memory and the network interface are separately connected to the processor by using the bus, the processor is configured to execute an instruction stored in the memory, and the processor executes the instruction to implement the data sending method according to any one of claims 1 to 3.

9. A computer-readable storage medium, wherein the computer-readable storage medium stores an instruction, and when the computer-readable storage medium runs on a computer, the computer performs the data receiving method according to claim 4.

10. A computer program product comprising an instruction, wherein when the computer program product runs on a computer, the computer performs the data receiving method according to claim 4.

**Patentansprüche**

1. Datensendeverfahren, wobei das Verfahren Folgendes umfasst:

   Vorcodieren, durch eine erste Übertragungsendvorrichtung, von wenigstens zwei ersten vorverarbeiteten räumlichen Flüssen, um mehrere erste vorcodierte Datenflüsse zu erhalten, wobei die wenigstens zwei ersten vorverarbeiteten räumlichen Flüsse durch Vorverarbeiten eines ersten ursprünglichen räumlichen Flusses erhalten werden; und
   Übertragen, durch die erste Übertragungsendvorrichtung, der mehreren ersten vorcodierten Datenflüsse;
   Vorcodieren, durch eine zweite Übertragungsendvorrichtung, von wenigstens zwei zweiten vorverarbeiteten räumlichen Flüssen, um mehrere zweite vorcodierte Datenflüsse zu erhalten, wobei die wenigstens zwei zweiten vorverarbeiteten räumlichen Flüsse durch Vorverarbeiten eines zweiten ursprünglichen räumlichen Flusses erhalten werden; und
   Übertragen, durch die zweite Übertragungsendvorrichtung, der mehreren zweiten vorcodierten Datenflüsse;
   Vorcodieren, durch eine dritte Übertragungsendvorrichtung, wenigstens eines dritten ursprünglichen räumlichen Flusses, um mehrere dritte vorcodierte Datenflüsse zu erhalten; und
   Übertragen, durch die dritte Übertragungsendvorrichtung, der mehreren dritten vorcodierten Datenflüsse;
   wobei das Vorverarbeiten verschiedene Arten von Übertragungsdiversitätsverarbeitung oder auf Übertragungsdiversität basierender räumlicher Multiplexverarbeitung umfasst; und
   wobei jede Art von Übertragungsdiversitätsverarbeitung oder auf Übertragungsdiversität basierender räumlicher Multiplexverarbeitung einer Übertragungslösung entspricht; und
   wobei die erste Übertragungsendvorrichtung, die zweite Übertragungsendvorrichtung und die dritte Übertragungsendvorrichtung mehrere Benutzereinrichtungen sind, wobei die mehreren Benutzereinrichtungen, durch Verwenden von Downlink-Signalisierung von einer Basisstation, angewiesen werden, eine Datenübertragung durch Verwenden unterschiedlicher Übertragungslösungen durchzuführen.

2. Verfahren nach Anspruch 1, wobei die Übertragungsdiversitätsverarbeitung eine Raum-Zeit-Übertragungsdiversitätsverarbeitung, eine Raum-Frequenz- Übertragungsdiversitätsverarbeitung oder eine Raum-Zeit-Frequenz- Übertragungsdiversitätsverarbeitung umfasst.

3. Verfahren nach Anspruch 1, wobei die Übertragungsdiversitätsverarbeitung eine zyklische Verzögerungsübertragungsdiversitätsverarbeitung umfasst.

4. Datenempfangsverfahren, wobei das Verfahren Folgendes umfasst:

   Empfangen, durch eine Empfangsendvorrichtung, mehrerer vorcodierter Datenflüsse, wobei die mehreren vorcodierten Datenflüsse durch das Vorcodieren mehrerer räumlicher Flüsse erhalten werden, wobei die mehreren räumlichen Flüsse wenigstens zwei erste vorverarbeitete räumliche Flüsse, wenigstens zwei zweite vorverarbeitete räumliche Flüsse und wenigstens einen dritten ursprünglichen räumlichen Fluss umfassen, wobei die wenigstens zwei ersten vorverarbeiteten räumlichen Flüsse durch Vorverarbeiten eines ersten ursprünglichen räumlichen Flusses erhalten werden, wobei die wenigstens zwei zweiten vorverarbeiteten räumlichen Flüsse durch Vorverarbeiten eines zweiten ursprünglichen räumlichen Flusses erhalten werden;
   wobei das Vorverarbeiten verschiedene Arten von Übertragungsdiversitätsverarbeitung oder auf Übertragungsdiversität basierender räumlicher Multiplexverarbeitung umfasst; und
   wobei jede Art von Übertragungsdiversitätsverarbeitung oder auf Übertragungsdiversität basierender räumlicher Multiplexverarbeitung einer Übertragungslösung entspricht; und
   wobei die Empfangsendvorrichtung eine Basisstation ist, wobei die Basisstation, durch Verwenden von Downlink-Signalisierung, mehrere Benutzereinrichtungen anweist, eine Datenübertragung durch Verwenden unterschiedlicher Übertragungslösungen durchzuführen;
   Wiederherstellen, durch die Empfangsendvorrichtung, der wenigstens zwei ersten vorverarbeiteten räumlichen Flüsse, der wenigstens zwei zweiten vorverarbeiteten räumlichen Flüsse und des wenigstens einen dritten ursprünglichen räumlichen Flusses aus den mehreren vorcodierten Datenflüssen; und
   Wiederherstellen, durch die Empfangsendvorrichtung, des ersten ursprünglichen räumlichen Flusses basierend auf den wenigstens zwei ersten vorverarbeiteten räumlichen Flüssen;
   Wiederherstellen, durch die Empfangsendvorrichtung, des zweiten ursprünglichen räumlichen Flusses basierend auf den wenigstens zwei zweiten vorverarbeiteten räumlichen Flüssen.

5. Empfangsendvorrichtung, wobei die Empfangsendvorrichtung Folgendes umfasst:

ein erstes Empfangsmodul, das konfiguriert ist, um mehrere vorcodierte Datenflüsse zu empfangen, wobei die mehreren vorcodierten Datenflüsse durch das Vorcodieren mehrerer räumlicher Flüsse erhalten werden, wobei die mehreren räumlichen Flüsse wenigstens zwei erste vorverarbeitete räumliche Flüsse, wenigstens zwei zweite vorverarbeitete räumliche Flüsse und wenigstens einen dritten ursprünglichen räumlichen Fluss umfassen, wobei die wenigstens zwei ersten vorverarbeiteten räumlichen Flüsse durch Vorverarbeiten eines ersten ursprünglichen räumlichen Flusses erhalten werden, wobei die wenigstens zwei zweiten vorverarbeiteten räumlichen Flüsse durch Vorverarbeiten eines zweiten ursprünglichen räumlichen Flusses erhalten werden;
wobei das Vorverarbeiten verschiedene Arten von Übertragungsdiversitätsverarbeitung oder auf Übertragungsdiversität basierender räumlicher Multiplexverarbeitung umfasst; und
wobei jede Art von Übertragungsdiversitätsverarbeitung oder auf Übertragungsdiversität basierender räumlicher Multiplexverarbeitung einer Übertragungslösung entspricht; und
wobei die Empfangsendvorrichtung eine Basisstation ist, wobei die Basisstation, durch Verwenden von Downlink-Signalisierung, mehrere Benutzereinrichtungen anweist, eine Datenübertragung durch Verwenden unterschiedlicher Übertragungslösungen durchzuführen;
ein erstes Wiederherstellungsmodul, das konfiguriert ist, um die wenigstens zwei ersten vorverarbeiteten räumlichen Flüsse aus den mehreren vorcodierten Datenflüssen wiederherzustellen; und
ein zweites Wiederherstellungsmodul, das konfiguriert ist, um den ersten ursprünglichen räumlichen Fluss basierend auf den wenigstens zwei ersten vorverarbeiteten räumlichen Flüssen wiederherzustellen; und
ein drittes Wiederherstellungsmodul, das konfiguriert ist, um die wenigstens zwei zweiten vorverarbeiteten räumlichen Flüsse aus den mehreren vorcodierten Datenflüssen wiederherzustellen; und
ein viertes Wiederherstellungsmodul, das konfiguriert ist, um den zweiten ursprünglichen räumlichen Fluss basierend auf den wenigstens zwei zweiten vorverarbeiteten räumlichen Flüssen wiederherzustellen; und

ein fünftes Wiederherstellungsmodul, das konfiguriert ist, um den wenigstens einen dritten ursprünglichen räumlichen Fluss aus den mehreren vorcodierten Datenflüssen wiederherzustellen.

6. Datenübertragungssystem, wobei das Datenübertragungssystem eine erste Übertragungsendvorrichtung, eine zweite Übertragungsendvorrichtung, eine dritte Übertragungsendvorrichtung und die Empfangsendvorrichtung nach Anspruch 5 umfasst, wobei die erste Übertragungsendvorrichtung Folgendes umfasst:

ein erstes Vorcodierungsmodul, das konfiguriert ist, um wenigstens zwei erste vorverarbeitete räumliche Flüsse vorzucodieren, um mehrere erste vorcodierte Datenflüsse zu erhalten, wobei die wenigstens zwei ersten vorverarbeiteten räumlichen Flüsse durch Vorverarbeiten eines ersten ursprünglichen räumlichen Flusses erhalten werden; und
ein erstes Übertragungsmodul, das konfiguriert ist, um die mehreren ersten vorcodierten Datenflüsse zu übertragen;
wobei die zweite Übertragungsendvorrichtung Folgendes umfasst:

ein erstes Vorcodierungsmodul, das konfiguriert ist, um wenigstens zwei zweite vorverarbeitete räumliche Flüsse vorzucodieren, um mehrere zweite vorcodierte Datenflüsse zu erhalten, wobei die wenigstens zwei zweiten vorverarbeiteten räumlichen Flüsse durch Vorverarbeiten eines zweiten ursprünglichen räumlichen Flusses erhalten werden; und
ein erstes Übertragungsmodul, das konfiguriert ist, um die mehreren zweiten vorcodierten Datenflüsse zu übertragen;
wobei die dritte Übertragungsendvorrichtung Folgendes umfasst:

ein erstes Vorcodierungsmodul, das konfiguriert ist, um wenigstens einen dritten ursprünglichen räumlichen Fluss vorzucodieren, um mehrere dritte vorcodierte Datenflüsse zu erhalten; und
ein erstes Übertragungsmodul, das konfiguriert ist, um die mehreren dritten vorcodierten Datenflüsse zu übertragen;
wobei das Vorverarbeiten verschiedene Arten von Übertragungsdiversitätsverarbeitung oder auf Übertragungsdiversität basierender räumlicher Multiplexverarbeitung umfasst; und

wobei jede Art von Übertragungsdiversitätsverarbeitung oder auf Übertragungsdiversität basierender räumlicher Multiplexverarbeitung einer Übertragungslösung entspricht; und
wobei die erste Übertragungsendvorrichtung, die zweite Übertragungsendvorrichtung und die dritte Übertragungsendvorrichtung mehrere Benutzereinrichtungen sind und die Empfangsendvorrichtung eine Basisstation ist, wobei die Basisstation, durch Verwenden von Downlink-Signalisierung, die mehreren Benutzereinrichtungen anweist, eine Datenübertragung durch Verwenden unterschiedlicher Übertragungslösungen durchzuführen.

7. Empfangsendvorrichtung, wobei die Empfangsendvorrichtung einen Prozessor, eine Netzwerkschnittstelle, einen Speicher und einen Bus umfasst, wobei der Speicher und die Netzwerkschnittstelle durch Verwenden des Busses mit dem Prozessor separat verbunden sind, wobei der Prozessor konfiguriert ist, um eine Anweisung auszuführen, die in dem Speicher gespeichert ist, und der Prozessor die Anweisung ausführt, das Datenempfangsverfahren nach Anspruch 4 zu implementieren.

8. Datenübertragungssystem, wobei das Datenübertragungssystem eine erste Übertragungsendvorrichtung, eine zweite Übertragungsendvorrichtung, eine dritte Übertragungsendvorrichtung und die Empfangsendvorrichtung nach Anspruch 7 umfasst, wobei jede der drei Übertragungsendvorrichtungen einen Prozessor, eine Netzwerkschnittstelle, einen Speicher und einen Bus umfasst, wobei der Speicher und die Netzwerkschnittstelle durch Verwenden des Busses mit dem Prozessor separat verbunden sind, wobei der Prozessor konfiguriert ist, um eine Anweisung auszuführen, die in dem Speicher gespeichert ist, und der Prozessor die Anweisung ausführt, das Datensendeverfahren nach einem der Ansprüche 1 bis 3 zu implementieren.

9. Computerlesbares Speichermedium, wobei das computerlesbare Speichermedium eine Anweisung speichert, und wenn das computerlesbare Speichermedium auf einem Computer abläuft, der Computer das Datenempfangsverfahren nach Anspruch 4 durchführt.

10. Computerprogrammprodukt, das eine Anweisung umfasst, wobei, wenn das Computerprogrammprodukt auf einem Computer abläuft, der Computer das Datenempfangsverfahren nach Anspruch 4 durchführt.

**Revendications**

1. Procédé d'envoi de données, le procédé comprenant :

le précodage, par un premier dispositif d'extrémité de transmission, d'au moins deux premiers flux spatiaux prétraités pour obtenir une pluralité de premiers flux de données précodés, les au moins deux premiers flux spatiaux prétraités étant obtenus par prétraitement d'un premier flux spatial d'origine ; et
la transmission, par le premier dispositif d'extrémité de transmission, de la pluralité de premiers flux de données précodés ;
le précodage, par un deuxième dispositif d'extrémité de transmission, d'au moins deux deuxièmes flux spatiaux prétraités pour obtenir une pluralité de deuxièmes flux de données précodés, les au moins deux deuxièmes flux spatiaux prétraités étant obtenus par prétraitement d'un deuxième flux spatial d'origine ; et
la transmission, par le deuxième dispositif d'extrémité de transmission, de la pluralité de deuxièmes flux de données précodés ;
le précodage, par un troisième dispositif d'extrémité de transmission, d'au moins un troisième flux spatial d'origine pour obtenir une pluralité de troisièmes flux de données précodés ; et
la transmission, par le troisième dispositif d'extrémité de transmission, de la pluralité de troisièmes flux de données précodés ;
le prétraitement comprenant différents types de traitement de diversité de transmission ou de traitement de multiplexage spatial basé sur la diversité de transmission ; et
chaque type de traitement de diversité de transmission ou de traitement de multiplexage spatial basé sur la diversité de transmission correspondant à une solution de transmission ; et
le premier dispositif d'extrémité de transmission, le deuxième dispositif d'extrémité de transmission et le troisième dispositif d'extrémité de transmission étant une pluralité d'équipements utilisateurs, la pluralité d'équipements utilisateurs recevant l'instruction, à l'aide de la signalisation de liaison descendante à partir d'une station de base, d'effectuer une transmission de données à l'aide de différentes solutions de transmission.

2. Procédé selon la revendication 1, le traitement de diversité de transmission comprenant un traitement de diversité de transmission espace-temps et/ou le traitement de diversité de transmission espace-fréquence et/ou le traitement de diversité de transmission espace-temps-fréquence.

**3.** Procédé selon la revendication 1, le traitement de diversité de transmission comprenant un traitement de diversité de transmission à retard cyclique.

**4.** Procédé de réception de données, le procédé comprenant :

la réception, par un dispositif d'extrémité de réception, d'une pluralité de flux de données précodés, la pluralité de flux de données précodés étant obtenus par précodage d'une pluralité de flux spatiaux, la pluralité de flux spatiaux comprenant au moins deux premiers flux spatiaux prétraités, au moins deux seconds flux spatiaux prétraités, et au moins un troisième flux spatial d'origine, les au moins deux premiers flux spatiaux prétraités étant obtenus par prétraitement d'un premier flux spatial d'origine, les au moins deux seconds flux spatiaux prétraités étant obtenus par prétraitement d'un deuxième flux spatial d'origine ;

le prétraitement comprenant différents types de traitement de diversité de transmission ou de traitement de multiplexage spatial basé sur la diversité de transmission ; et

chaque type de traitement de diversité de transmission ou de traitement de multiplexage spatial basé sur la diversité de transmission correspondant à une solution de transmission ; et

le dispositif d'extrémité de réception étant une station de base, la station de base donnant instruction, à l'aide de la signalisation de liaison descendante, à une pluralité d'équipements utilisateurs d'effectuer une transmission de données à l'aide de différentes solutions de transmission ;

la restauration, par le dispositif d'extrémité de réception, des au moins deux premiers flux spatiaux prétraités, des au moins deux seconds flux spatiaux prétraités et de l'au moins un troisième flux spatial d'origine à partir de la pluralité de flux de données précodés ; et

la restauration, par le dispositif d'extrémité de réception, du premier flux spatial d'origine sur la base des au moins deux premiers flux spatiaux prétraités ;

la restauration, par le dispositif d'extrémité de réception, du deuxième flux spatial d'origine sur la base des au moins deux seconds flux spatiaux prétraités.

**5.** Dispositif d'extrémité de réception, le dispositif d'extrémité de réception comprenant :

un premier module de réception, configuré pour recevoir une pluralité de flux de données précodés, la pluralité de flux de données précodés étant obtenus par précodage d'une pluralité de flux spatiaux, la pluralité de flux spatiaux comprenant au moins deux premiers flux spatiaux prétraités, au moins deux seconds flux spatiaux prétraités, et au moins un troisième flux spatial d'origine, les au moins deux premiers flux spatiaux prétraités étant obtenus par prétraitement d'un premier flux spatial d'origine, les au moins deux seconds flux spatiaux prétraités étant obtenus par prétraitement d'un deuxième flux spatial d'origine ;

le prétraitement comprenant différents types de traitement de diversité de transmission ou de traitement de multiplexage spatial basé sur la diversité de transmission ; et

chaque type de traitement de diversité de transmission ou de traitement de multiplexage spatial basé sur la diversité de transmission correspondant à une solution de transmission ; et

le dispositif d'extrémité de réception étant une station de base, la station de base donnant instruction, à l'aide de la signalisation de liaison descendante, à une pluralité d'équipements utilisateurs d'effectuer une transmission de données à l'aide de différentes solutions de transmission ;

un premier module de restauration, configuré pour restaurer les au moins deux premiers flux spatiaux prétraités à partir de la pluralité de flux de données précodés ; et

un deuxième module de restauration, configuré pour restaurer le premier flux spatial d'origine sur la base des au moins deux premiers flux spatiaux prétraités ; et

un troisième module de restauration, configuré pour restaurer les au moins deux seconds flux spatiaux prétraités à partir de la pluralité de flux de données précodés ; et

un quatrième module de restauration, configuré pour restaurer le deuxième flux spatial d'origine sur la base des au moins deux seconds flux spatiaux prétraités ; et

un cinquième module de restauration, configuré pour restaurer l'au moins un troisième flux spatial d'origine à partir de la pluralité de flux de données précodés.

**6.** Système de transmission de données, le système de transmission de données comprenant un premier dispositif d'extrémité de transmission, un deuxième dispositif d'extrémité de transmission, un troisième dispositif d'extrémité de transmission et le dispositif d'extrémité de réception selon la revendication 5, le premier dispositif d'extrémité de transmission comprenant :

un premier module de précodage, configuré pour précoder au moins deux premiers flux spatiaux prétraités pour obtenir une pluralité de premiers flux de données précodés, les au moins deux premiers flux spatiaux prétraités étant obtenus par prétraitement d'un premier flux spatial d'origine ; et

un premier module de transmission, configuré pour transmettre la pluralité de premiers flux de données précodés ;

le deuxième dispositif d'extrémité de transmission comprenant :

un premier module de précodage, configuré pour précoder au moins deux seconds flux spatiaux prétraités pour obtenir une pluralité de seconds flux de données précodés, les au moins deux seconds flux spatiaux prétraités étant obtenus par prétraitement d'un deuxième flux spatial d'origine ; et

un premier module de transmission, configuré pour transmettre la pluralité de seconds flux de données précodés ;

le troisième dispositif d'extrémité d'émission comprenant :

un premier module de précodage, configuré pour précoder au moins un troisième flux spatial d'origine pour obtenir une pluralité de troisièmes flux de données précodés ; et

un premier module de transmission, configuré pour transmettre la pluralité de troisièmes flux de données précodés ;

le prétraitement comprenant différents types de traitement de diversité de transmission ou de traitement de multiplexage spatial basé sur la diversité de transmission ; et

chaque type de traitement de diversité de transmission ou de traitement de multiplexage spatial basé sur la diversité de transmission correspondant à une solution de transmission ; et

le premier dispositif d'extrémité de transmission, le deuxième dispositif d'extrémité de transmission et le troisième dispositif d'extrémité de transmission étant une pluralité d'équipements utilisateurs et le dispositif d'extrémité de réception étant une station de base, la station de base donnant instruction, à l'aide de la signalisation de liaison descendante, à la pluralité d'équipements utilisateurs d'effectuer la transmission de données à l'aide de différentes solutions de transmission.

7. Dispositif d'extrémité de réception, le dispositif d'extrémité de réception comprenant un processeur, une interface réseau, une mémoire et un bus, la mémoire et l'interface réseau étant connectées séparément au processeur à l'aide du bus, le processeur étant configuré pour exécuter une instruction stockée dans la mémoire, et le processeur exécutant l'instruction pour mettre en œuvre le procédé de réception de données selon la revendication 4.

8. Système de transmission de données, le système de transmission de données comprenant un premier dispositif d'extrémité de transmission, un deuxième dispositif d'extrémité de transmission, un troisième dispositif d'extrémité de transmission et le dispositif d'extrémité de réception selon la revendication 7, chacun des trois dispositifs d'extrémité de transmission comprenant un processeur, une interface réseau, une mémoire et un bus, la mémoire et l'interface réseau étant connectées séparément au processeur à l'aide du bus, le processeur étant configuré pour exécuter une instruction stockée dans la mémoire et le processeur exécutant l'instruction pour mettre en œuvre le procédé d'envoi de données selon l'une quelconque des revendications 1 à 3.

9. Support de stockage lisible par ordinateur, le support de stockage lisible par ordinateur stockant une instruction, et lorsque le support de stockage lisible par ordinateur s'exécute sur un ordinateur, l'ordinateur effectuant le procédé de réception de données selon la revendication 4.

10. Produit-programme informatique comprenant une instruction, l'ordinateur effectuant, lorsque le produit programme informatique s'exécute sur un ordinateur, le procédé de réception de données selon la revendication 4.

FIG. 1

Precode at least two first preprocessed spatial flows to obtain a plurality of precoded data flows, where the at least two first preprocessed spatial flows are obtained by preprocessing a first original spatial flow

201

Transmit the plurality of precoded data flows

202

FIG. 2

Receive a plurality of precoded data flows, where the plurality of precoded data flows are obtained by precoding a plurality of spatial flows, the plurality of spatial flows include at least two first preprocessed spatial flows, and the at least two first preprocessed spatial flows are obtained by preprocessing a first original spatial flow

301

Restore the at least two first preprocessed spatial flows from the plurality of precoded data flows

302

Restore the first original spatial flow based on the at least two first preprocessed spatial flows

303

FIG. 3

| First transmit end device | Second transmit end device | Third transmit end device | Receive end device |
|---|---|---|---|

401. Precode at least two first preprocessed spatial flows to obtain a plurality of precoded data flows, where the at least two first preprocessed spatial flows are obtained by preprocessing a first original spatial flow

402. Transmit the plurality of precoded data flows

403. Precode demodulation reference signals of the at least two first preprocessed spatial flows to obtain a plurality of precoded demodulation reference signals

404. Transmit the plurality of precoded demodulation reference signals

405. Precode at least two second preprocessed spatial flows to obtain a plurality of precoded data flows, where the at least two second preprocessed spatial flows are obtained by preprocessing a second original spatial flow

406. Transmit the plurality of precoded data flows

TO FIG. 4-1B  TO FIG. 4-1B  TO FIG. 4-1B  TO FIG. 4-1B

FIG. 4-1A

CONT. FROM FIG. 4-1A

CONT. FROM FIG. 4-1A

CONT. FROM FIG. 4-1A

CONT. FROM FIG. 4-1A

407. Precode demodulation reference signals of the at least two second preprocessed spatial flows to obtain a plurality of precoded demodulation reference signals

408. Transmit the plurality of precoded demodulation reference signals

409. Precode at least one original spatial flow to obtain a plurality of precoded data flows

410. Transmit the plurality of precoded data flows

411. Precode a demodulation reference signal of the at least one original spatial flow to obtain a plurality of precoded demodulation reference signals

412. Transmit the plurality of precoded demodulation reference signals

TO FIG. 4-1C

TO FIG. 4-1C

TO FIG. 4-1C

TO FIG. 4-1C

FIG. 4-1B

CONT.
FROM
FIG. 4-1B

CONT.
FROM
FIG. 4-1B

CONT.
FROM
FIG. 4-1B

CONT.
FROM
FIG. 4-1B

413. Receive a plurality of precoded data flows, where the plurality of precoded data flows are obtained by precoding a plurality of spatial flows, the plurality of spatial flows include the at least two first preprocessed spatial flows, the at least two second preprocessed spatial flows, and the at least one original spatial flow

414. Receive a plurality of precoded demodulation reference signals, where the plurality of precoded demodulation reference signals are obtained by precoding demodulation reference signals of the plurality of spatial flows

415. Restore the at least two first preprocessed spatial flows, the at least two second preprocessed spatial flows, and the at least one original spatial flow from the plurality of precoded data flows

416. Restore the first original spatial flow based on the at least two first preprocessed spatial flows

417. Restore the second original spatial flow based on the at least two second preprocessed spatial flows

FIG. 4-1C

FIG. 4-2

FIG. 4-3

FIG. 4-4

500

Transmit end device

510

First precoding module

520

First transmission module

FIG. 5-1

500

Transmit end device

510

First precoding module

520

First transmission module

530

Second precoding module

540

Second transmission module

FIG. 5-2

600

Receive end device

610

First receiving module

620

First restoration module

630

Second restoration module

FIG. 6-1

600

Receive end device

610

First receiving module

670

Second receiving module

620

First restoration module

630

Second restoration module

640

Third restoration module

650

Fourth restoration module

660

Fifth restoration module

FIG. 6-2

710

Processor

740

Network
interface

750

700

Bus

720

Transmitter

730

Memory

Transmit end device

FIG. 7

810

Receiver

840

Network
interface

850

800

Bus

820

Processor

830

Memory

Receive end device

FIG. 8

900

Data transmission system

910

920

| Transmit end device | | Receive end device |

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2802087 A1

**Non-patent literature cited in the description**

- **A. DAMMANN ; R. RAULEFS ; S. KAISER.** Beamforming in Combination with Space-Time Diversity for Broadband OFDM Systems. *Proceedings of IEEE International Conference on Communications (ICC 2002),* 28 April 2002, vol. 1, 165-171